(19) Europäisches Patentamt
European Patent Office
Office européen des brevets

(11) **EP 3 163 324 B1**

(12) **EUROPEAN PATENT SPECIFICATION**

(45) Date of publication and mention
of the grant of the patent:
**05.01.2022 Bulletin 2022/01**

(51) Int Cl.:
***G01S 19/41*** *(2010.01)*

(21) Application number: **14895609.7**

(86) International application number:
**PCT/JP2014/078238**

(22) Date of filing: **23.10.2014**

(87) International publication number:
**WO 2015/198501 (30.12.2015 Gazette 2015/52)**

(54) **POSITIONING DEVICE, POSITIONING METHOD, AND PROGRAM**

POSITIONIERUNGSVORRICHTUNG, POSITIONIERUNGSVERFAHREN UND PROGRAMM

DISPOSITIF DE POSITIONNEMENT, PROCÉDÉ DE POSITIONNEMENT ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2014 JP 2014130205**

(43) Date of publication of application:
**03.05.2017 Bulletin 2017/18**

(73) Proprietor: **Mitsubishi Electric Corporation**
**Chiyoda-ku**
**Tokyo 100-8310 (JP)**

(72) Inventors:
• **MIYA, Masakazu**
**Tokyo 100-8310 (JP)**
• **SAITO, Masayuki**
**Tokyo 100-8310 (JP)**
• **SATO, Yuki**
**Tokyo 100-8310 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(56) References cited:
**WO-A2-2011/100680      JP-A- 2004 198 291**
**JP-A- 2009 210 408      JP-A- 2009 257 802**
**US-A1- 2006 158 373      US-A1- 2012 182 181**

• **MASAYUKI SAITO ET AL: "Centimeter-class Augmentation System Utilizing Quasi-Zenith Satellite", GNSS 2011 - PROCEEDINGS OF THE 24TH INTERNATIONAL TECHNICAL MEETING OF THE SATELLITE DIVISION OF THE INSTITUTE OF NAVIGATION (ION GNSS 2011), THE INSTITUTE OF NAVIGATION, 8551 RIXLEW LANE SUITE 360 MANASSAS, VA 20109, USA, 23 September 2011 (2011-09-23), page 1243, XP056000869,**
• **None**

**Description**

<u>Technical Field</u>

The present invention relates to a positioning device that performs satellite positioning.

<u>Background Art</u>

A positioning error in each positioning scheme will be described first.

In an autonomous positioning scheme in which a positioning device autonomously determines a position by using code information of a GNSS (Global Navigation Satellite System) signal from a satellite positioning system (GNSS) such as a GPS (Global Positioning System), a positioning accuracy is on the order of meters due to an error included in the GNSS signal.

In comparison with the autonomous positioning scheme using th e code information, a positioning scheme using correction data including carrier phase information realizes highly accurate positioning on the order of centimeters.

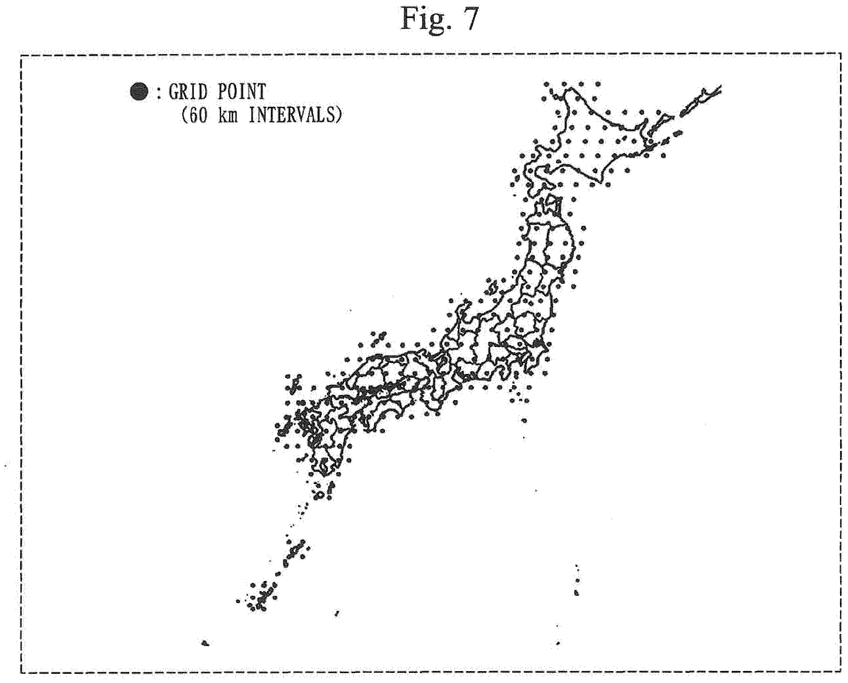

In particular, there is a scheme called a network-type RTK (Realtime Kinematic) scheme in which a GNSS signal is received at a plurality of electronic reference points (distributed at intervals of 60 kilometers in Japan (FIG. 7)), the accurate positions of which are already known, to estimate an amount of error included in the GNSS signal inversely from the known positions of the electronic reference points, distribute it to a user as correction data, and perform positioning on the order of centimeters together with a GNSS signal acquired by a positioning device on the user's side.

For example, Patent Literature 1 discloses a scheme in which correction data valid in a wide area nationwide is distributed from a quasi-zenith satellite to realize highly accurate positioning on the order of centimeters.

The background technology of the present invention is also disclosed in Patent Literature 2 to Patent Literature 5 and Non Patent Literature 1.

<u>List of Citations</u>

<u>Patent Literature</u>

| | |
|---|---|
| Patent Literature 1: | JP 2002-323 552 A |
| Patent Literature 2: | JP 2004-198291 A |
| Patent Literature 3: | WO 2011/100680 A2 |
| Patent Literature 4: | US 2006/158373 A1 |
| Patent Literature 5: | US 2012/182181 A1 |

| | |
|---|---|
| Non Patent Literature 1: | MASAYUKI SAITO ET AL: "Centimeter-class Augmentation System Utilizing Quasi-Zenith Satellite",GNSS 2011 - PROCEEDINGS OF THE 24TH INTERNATIONAL TECHNICAL MEETING OF THE SATELLITE DIVISION OF THE INSTITUTE OF NAVIGATION (ION GNSS 2011), THE INSTITUTE OF NAVIGATION, 8551 RIXLEW LANE SUITE 360 MANASSAS, VA 20109, USA, 23 September 2011 (2011-09-23), page 1243, XP056000869 |

<u>Summary of the Invention</u>

<u>Technical Problem</u>

The correction data distributed from the quasi-zenith satellite includes all pieces of correction data at about 350 virtual electronic reference points located throughout Japan (hereinafter the electronic reference points will also be called grid points).

To correct a positioning error, therefore, the positioning device needs to select electronic reference points placed near the positioning device from among the 350 electronic reference points.

As a method for selecting electronic reference points, a method of selecting four electronic reference points in a descending order of nearness to the positioning device may be considered, for example.

However, there is a problem as indicated below in this method of selecting electronic reference points simply based on the distance from the positioning device.

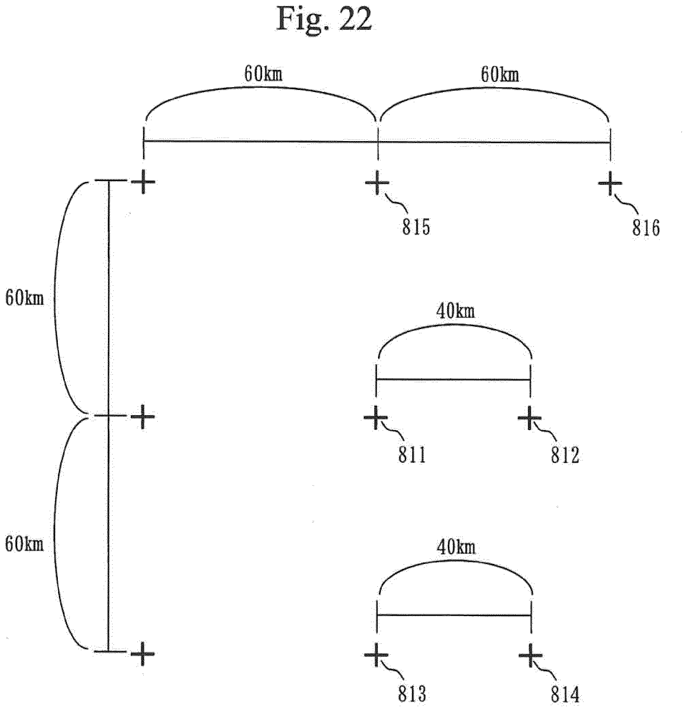

FIG. 22 illustrates an example of arrangement of electronic reference points.

In FIG. 22, each + symbol indicates a location where an electronic reference point is placed.

The electronic reference points are virtual points which are placed in a grid pattern at intervals of 60 kilometers in principle as described above.

However, in an environment such as a vicinity of a coastline or a mountainous region, the electronic reference points may be placed at intervals shorter than 60 kilometers depending on geographical features of the coastline, a mountain, or the like.

In the example of FIG. 22, an interval between an electronic reference point 811 and an electronic reference point 812 is 40 kilometers, and an interval between an electronic reference point 813 and an electronic reference point 814 is also 40 kilometers.

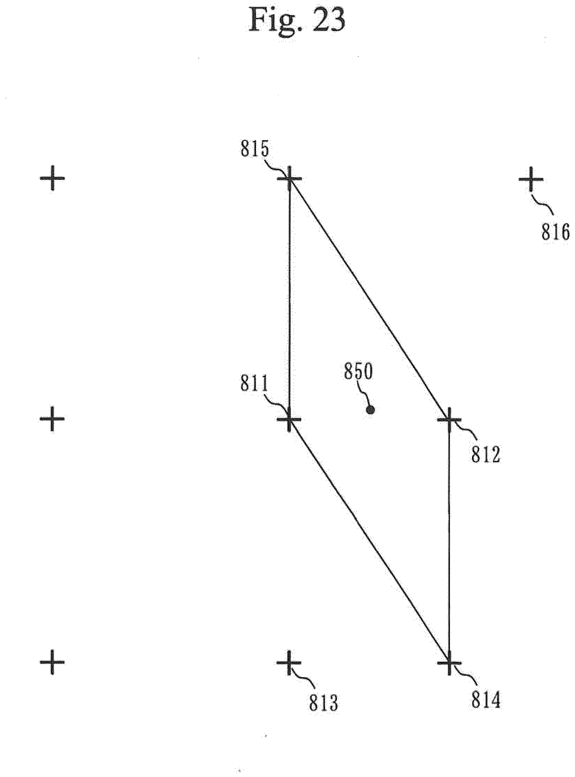

FIG. 23 illustrates an example in which four electronic reference points are selected in the descending order of nearness to the positioning device in the arrangement of the electronic reference points illustrated in FIG. 22.

In FIG. 23, a reference numeral 850 indicates a position where the positioning device is located.

When four electronic reference points are selected in the descending order of nearness to the positioning device 850 in the arrangement of the electronic reference points illustrated in FIG. 22, the electronic reference points 811, 812, 814, and 815 are selected.

In the example of selecting electronic reference points in FIG. 23, a distance in a longitudinal direction (for example, a latitude direction) between the electronic reference point 815 and the electronic reference point 814 is as long as 120 kilometers, and the distance in the longitudinal direction is much longer than that in a lateral direction, so that there is a possibility that a positioning accuracy in the longitudinal direction is reduced.

In terms of positioning accuracy, it is desirable that the shape of a quadrangle formed by the four electronic reference points (a quadrangle surrounding the positioning device 850) resemble a square as closely as possible.

An electronic reference point 816 is farther from the positioning device 850 compared with the electronic reference point 814, so that the electronic reference point 816 is not selected by the method of selecting four electronic reference points in the descending order of nearness to the positioning device 850.

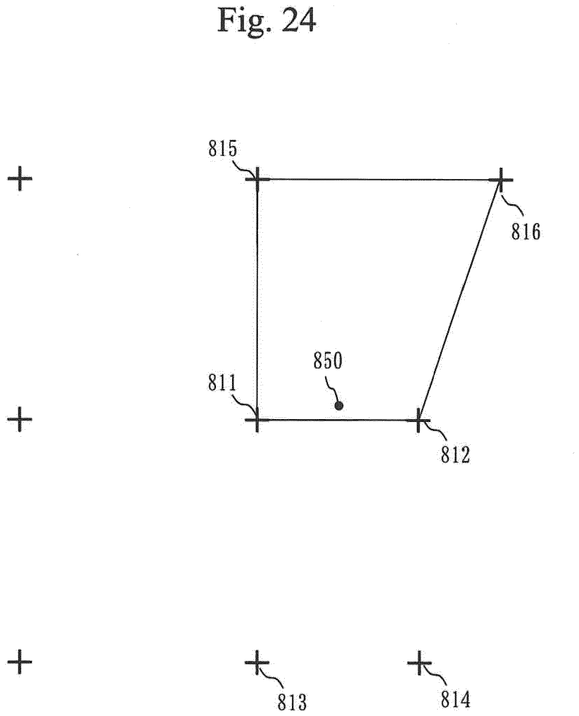

However, a quadrangle formed by the electronic reference points 816, 815, 811, and 812 as illustrated in FIG. 24 resembles a square more closely compared with the quadrangle in FIG. 23, and it is thus desirable that the electronic reference point 816 be selected in order to realize highly accurate positioning.

The present invention has been made in view of the above-described point, and mainly aims to enable a positioning device to select four electronic reference points such that a quadrangular area formed by the four electronic reference points includes the positioning device, and the shape of the quadrangular area closely resembles a square.

Solution to the Problem

In order to solve the above problems and achieve the object, the subject-matter of independent claims 1, 6 and 7 is proposed according to the invention. Advantageous further developments thereof are specified in the subclaims.

Advantageous Effects of the Invention

According to the present invention, a positioning device can select four electronic reference points such that a quadrangular area includes the positioning device and the shape of the quadrangular area closely resembles a square.

Brief Description of the Drawings

FIG. 1 is a diagram illustrating an example of a configuration of a positioning system according to a first embodiment;

FIG. 2 is a diagram illustrating input/output of a positioning device according to the first embodiment;

FIG. 3 is a diagram describing input/output data of the positioning device according to the first embodiment;

FIG. 4 is a diagram describing observation data according to the first embodiment;

FIG. 5 is a diagram illustrating sources of errors included in a GPS signal according to the first embodiment;

FIG. 6 is a diagram describing a relation between the errors in the GPS signal and reinforcement information according to the first embodiment;

FIG. 7 is a diagram illustrating grid points according to the first embodiment;

FIG. 8 is a diagram illustrating an example of a configuration of the positioning device according to the first embodiment;

FIG. 9 is a diagram illustrating an example of a configuration of a correction data creation section according to the first embodiment;

FIG. 10   is a diagram illustrating an example of selecting grid points according to the first embodiment;

FIG. 11   is a flow diagram illustrating in outline an example of the operation of the correction data creation section according to the first embodiment;

FIG. 12   is a flow diagram illustrating in outline the example of the operation of the correction data creation section according to the first embodiment;

FIG. 13   is a flow diagram illustrating in detail the example of the operation of the correction data creation section according to the first embodiment;

FIG. 14   is a flow diagram illustrating in detail the example of the operation of the correction data creation section according to the first embodiment;

FIG. 15   is a diagram illustrating an example of selecting nine grid points according to the first embodiment;

FIG. 16   is a diagram illustrating an example of selecting nine grid points according to the first embodiment;

FIG. 17   is a diagram illustrating an example of selecting 12 grid points according to the first embodiment;

FIG. 18   is a diagram illustrating an example of selecting eight grid points according to the first embodiment;

FIG. 19   is a diagram illustrating an example of selecting 16 grid points according to the first embodiment;

FIG. 20   is a diagram illustrating an example of selecting five grid points according to the first embodiment;

FIG. 21   is a diagram illustrating an example of a hardware configuration of the positioning device according to the first embodiment;

FIG. 22   is a diagram illustrating an example of arrangement of grid points;

FIG. 23   is a diagram illustrating an example of selecting grid points; and

FIG. 24   is a diagram illustrating a preferred example of selecting grid points.

Description of Embodiments

First Embodiment

1. System Configuration

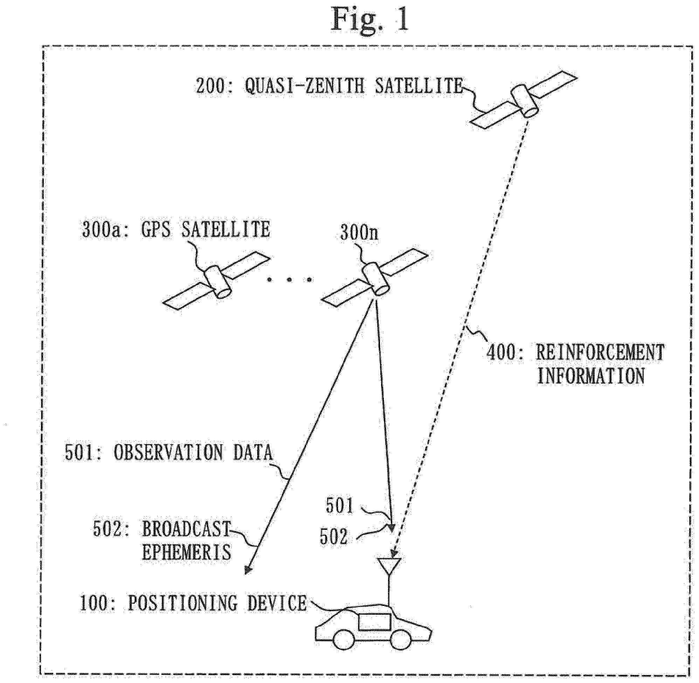

FIG. 1 is a diagram illustrating an example of a configuration of a positioning system according to this embodiment.

There will be described below an example in which a quasi-zenith satellite is used to distribute reinforcement information.

In place of the quasi-zenith satellite, a geostationary satellite such as a communication satellite or a broadcast satellite may be used, or another satellite may be used as long as it has a function of uniformly broadcasting the reinforcement information to a wide area.

There will be described below an example in which a GPS satellite is used as a positioning satellite.

In place of the GPS satellite, a GNSS such as GLONASS, Galileo, and BeiDou, an IRNSS (Indian Regional Navigational Satellite System), or an RNSS (Regional Navigation Satellite System) such as a quasi-zenith satellite may be used.

With reference to FIG. 1, a positioning device 100 is mounted to a mobile body (a rover) such as an automobile, for example.

The positioning device 100 receives observation data 501 and a broadcast ephemeris 502 transmitted from a GNSS (GPS) satellite 300.

The broadcast ephemeris 502 is also called an ephemeris.

The positioning device 100 also receives reinforcement information 400 transmitted from a quasi-zenith satellite 200 (also denoted as QZS).

In this and subsequent embodiments, the operation of the positioning device 100 will be mainly described.

The quasi-zenith satellite 200 receives reinforcement information from a ground station not illustrated in FIG. 1, and distributes the received reinforcement information as the reinforcement information 400.

The GPS satellite 300 transmits the observation data 501 and the broadcast ephemeris 502.

The positioning device 100 needs to acquire four or more of the GPS satellite 300 in order to perform positioning.

2. Overview of Operation of Positioning Device 100

An overview of the operation of the positioning device 100 to be described in this and subsequent embodiments will be described here.

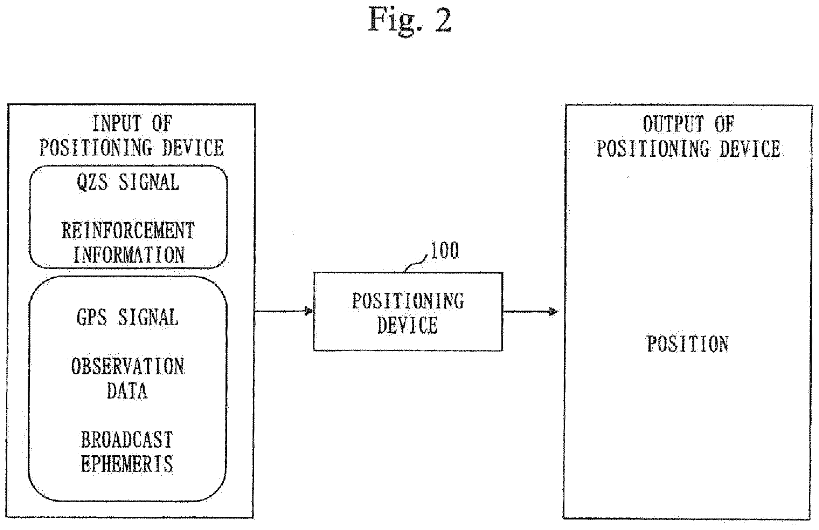

As illustrated in FIG. 2, the positioning device 100 receives the observation data 501 and the broadcast ephemeris 502 as a GPS signal, and receives the reinforcement information 400 as a QZS signal.

Then, the positioning device 100 calculates a position of a positioning point (a position of the positioning device 100) by using the reinforcement information 400 as well as the observation data 501 and the broadcast ephemeris 502.

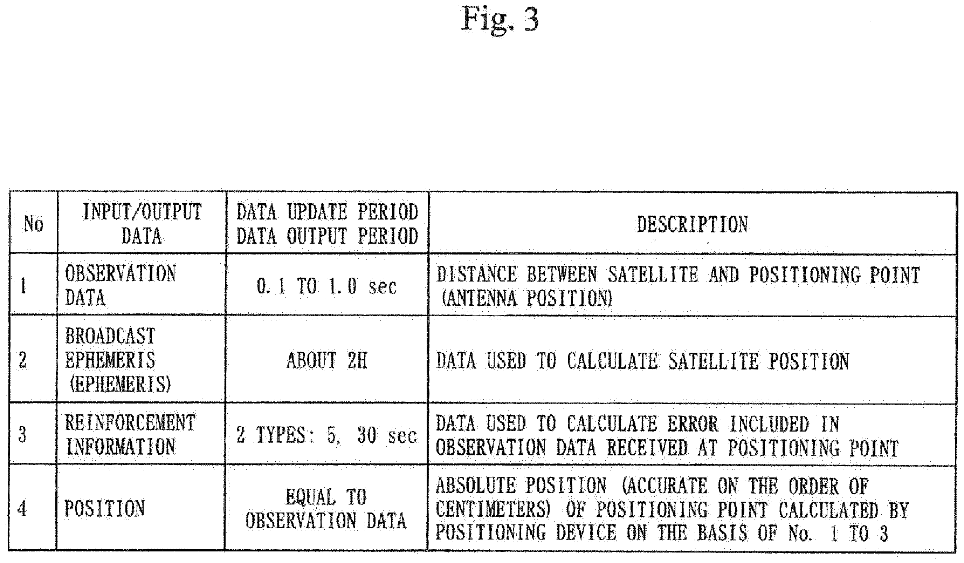

FIG. 3 illustrates the observation data 501, the broadcast ephemeris 502, the reinforcement information 400, and the position in detail.

3.1. Observation Data

A pseudo-range between the positioning point and the GPS satellite 300 as well as a carrier phase can be derived from the observation data 501.

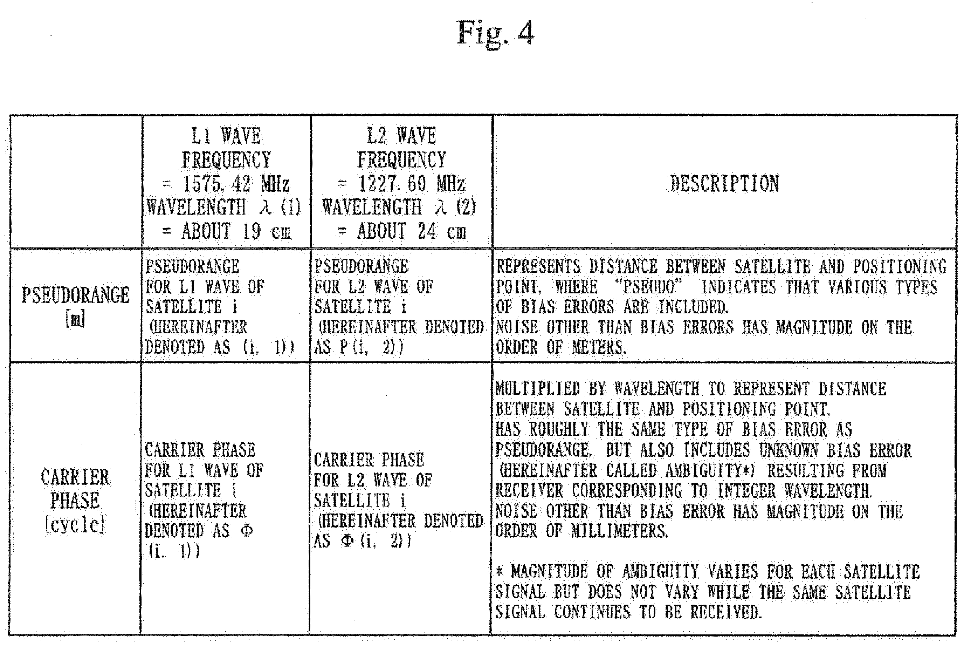

FIG. 4 illustrates the pseudo-range and the carrier phase in detail.

Each of the pseudo-range and the carrier phase derived from the observation data 501 includes an error.

The positioning device 100 eliminates the errors included in the pseudo-range and the carrier phase by using the reinforcement information 400.

Note that a pseudo-range for L1 wave of a GPS satellite i will be denoted as P(i, 1), and a pseudo-range for L2 wave of the GPS satellite i will be denoted as P(i, 2) hereinafter.

Also note that a carrier phase for L1 wave of the GPS satellite i will be denoted as $\Phi(i, 1)$, and a carrier phase for L2 wave of the GPS satellite i will be denoted as $\Phi(i, 2)$.

3.2. Reinforcement Information

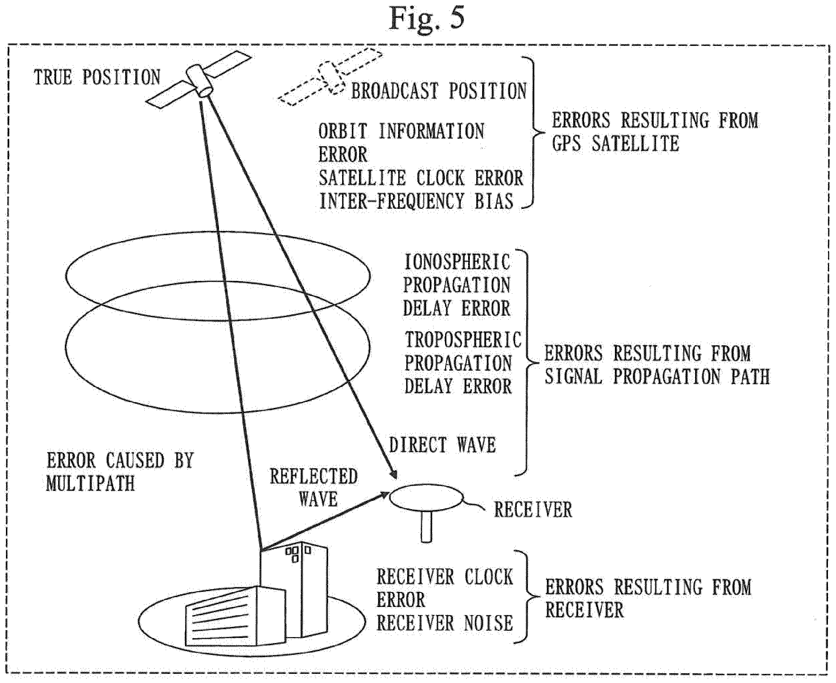

FIG. 5 illustrates sources of a bias error and noise included in the observation data 501.

Errors resulting from the GPS satellite 300 include an orbit error, a satellite clock error, and an inter-frequency bias. Errors resulting from a signal propagation path include an ionospheric propagation delay error (also called an ionospheric delay error or an ionospheric delay amount) and a tropospheric propagation delay error (also called a tropospheric delay error or a tropospheric delay amount).

Further, errors resulting from a receiver of the positioning device 100 include a receiver clock error, receiver noise, and a multipath error that is caused by an interference between a GPS signal reflected off a building and a GPS signal directly received from the GPS satellite 300.

Among these errors, the errors resulting from the receiver vary depending on the performance and reception environment of the receiver of the positioning device 100 used by a user, and are thus not included in the correction data and the reinforcement information. The errors resulting from the receiver are eliminated by processing of the positioning device 100.

The errors resulting from the GPS satellite 300 and the errors resulting from the signal propagation path are compressed and distributed from the quasi-zenith satellite 200 as the reinforcement information.

In addition to the errors illustrated in FIG. 5, an error resulting from an earth tide effect and an error resulting from a phase wind up effect that vary depending on the position of the positioning point are included in the correction data, but are not included in the reinforcement information.

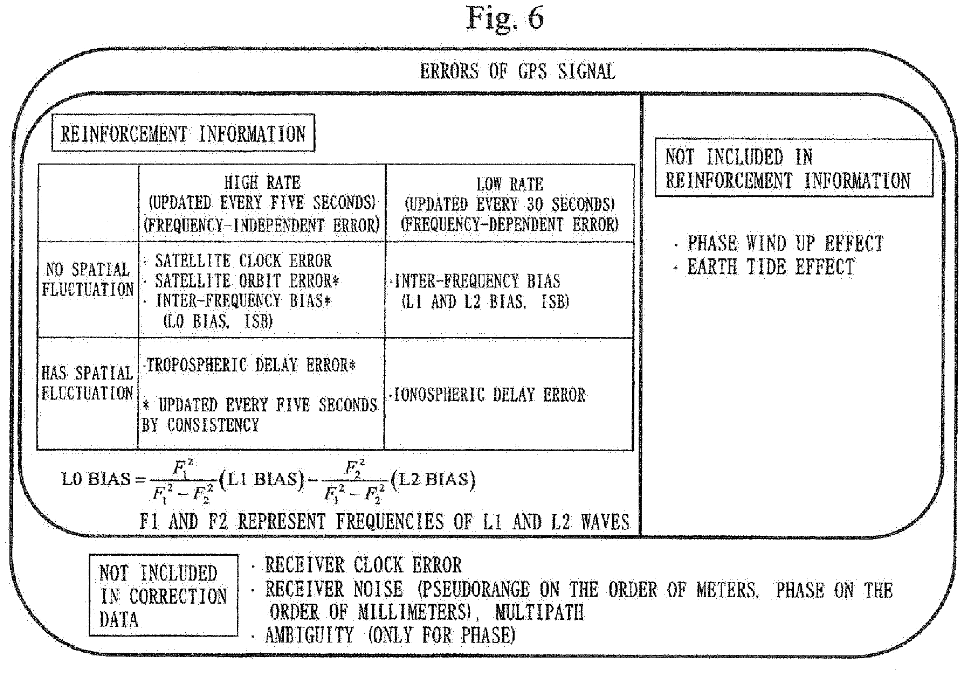

FIG. 6 illustrates a breakdown of the reinforcement information taking the above description into consideration.

The correction data distributed from a reference point via a wireless LAN is distributed with an update period of one second. However, in the reinforcement information according to this embodiment, the errors are classified into a high rate and a low rate according to the degree of temporal fluctuations and are subjected to time compression.

More specifically, an error classified as the high rate is updated every five seconds, and an error classified as the low rate is updated every 30 seconds.

Conventionally, correction data is generated and distributed at each reference point set at intervals of about 10 to 30 kilometers. However, in the reinforcement information according to this embodiment, the ionospheric delay error and the tropospheric delay error (that have spatial fluctuations) resulting from the signal path are subjected to spatial compression so as to be distributed only at one grid point in every 60 kilometers square (FIG. 7).

Furthermore, in this embodiment, the errors included in the reinforcement information are classified into errors dependent on frequency (frequency-dependent errors) and errors independent of frequency (frequency-independent errors).

The frequency-independent errors are classified as high-rate errors, and the frequency-dependent errors are classified as low-rate errors.

Among the frequency-independent errors, only the satellite clock error is updated and distributed every five seconds.

Other frequency-independent errors, namely the satellite orbit error, the inter-frequency bias, and the tropospheric delay error, are updated and distributed every 30 seconds.

However, for each of the satellite orbit error, the inter-frequency bias, and the tropospheric delay error, a variation from the error updated every 30 seconds is added every five seconds to the satellite clock error (updated and distributed every five seconds) as a correction value.

That is, during 30 seconds, five correction values (30 seconds/5 seconds - 1) for each of the satellite orbit error, the inter-frequency bias, and the tropospheric delay error are added to the satellite clock error updated every five seconds.

As a result, the positioning device 100 can receive an update value of each of the satellite orbit error, the inter-frequency bias, and the tropospheric delay error every 30 seconds, and can also receive a correction value for each of the satellite orbit error, the inter-frequency bias, and the tropospheric delay error every five seconds.

Then, the positioning device 100 can perform correction on each of the satellite orbit error, the inter-frequency bias, and the tropospheric delay error every five seconds by adding the correction value received every five seconds to the update value received every 30 seconds.

The correction value for each of the satellite orbit error, the inter-frequency bias, and the tropospheric delay error which is added to the satellite clock error every five seconds is also called a consistency.

In this way, the data volume of the reinforcement information is compressed by distributing the consistency every five seconds in this embodiment.

The inter-frequency bias is based on an L1 signal and represents a delay amount within a satellite payload for each signal. The inter-frequency bias (L1 bias) is '0', and the inter-frequency bias (L2 bias) represents a delay amount of an L2 carrier signal with respect to an L1 carrier signal 'L2 - L1'.

The inter-frequency bias (L0 bias) represents a frequency-independent term of the inter-frequency bias, and is calculated from the inter-frequency bias (L1 bias) and the inter-frequency bias (L2 bias), as indicated in formula 1 in FIG. 6.

It has been described that the inter-frequency bias is based on the L1 signal. However, the inter-frequency bias may also be based on another signal without any problem. When an L5 signal is also included, the same effect can be expected.

4. Example of Configuration of Positioning Device

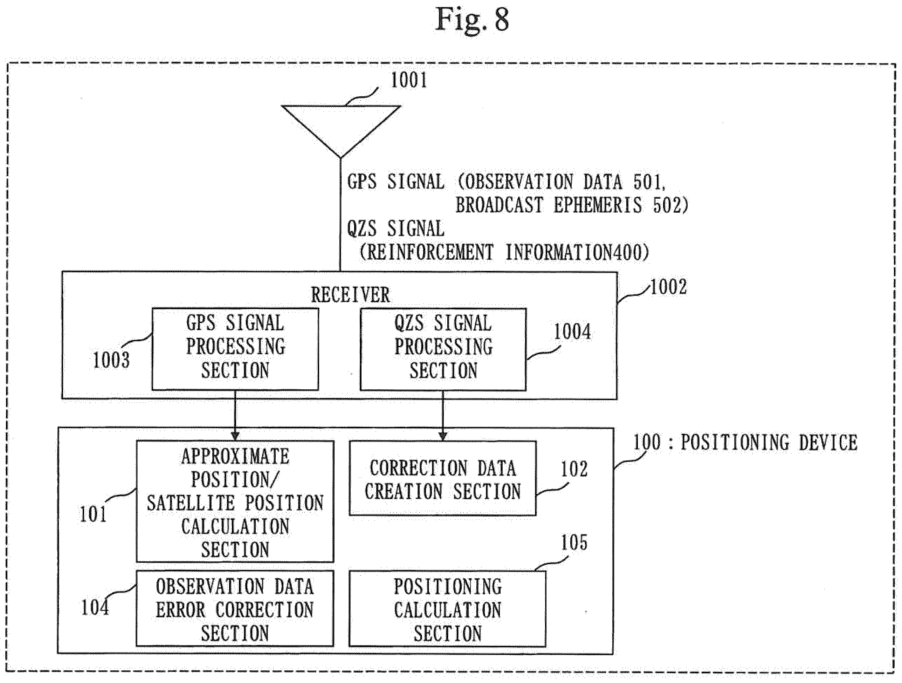

FIG. 8 illustrates an example of a configuration of the positioning device 100 according to this embodiment.

The positioning device 100 is connected to a receiver 1002 including an antenna 1001.

In the receiver 1002, a GPS signal processing section 1003 receives a GPS signal (the observation data 501 and the broadcast ephemeris 502) from the GPS satellite 300 via the antenna 1001.

A QZS signal processing section 1004 receives a QZS signal (the reinforcement information 400) from the quasi-zenith satellite 200 via the antenna 1001.

The reinforcement information 400 is reinforcement information on the order of centimeters.

In the positioning device 100, an approximate position/satellite position calculation section 101 acquires the observation data 501 and the broadcast ephemeris 502 from the GPS signal processing section 1003, and calculates an approximate position of the positioning point and a position of each GPS satellite 300 by using the observation data 501 and the broadcast ephemeris 502.

Calculation results of the approximate position/satellite position calculation section 101 will be called an approximate position and a satellite position hereinafter.

The approximate position is the position of the positioning point accurate on the order of meters which is calculated by autonomous positioning.

The satellite position is the position of each GPS satellite 300 from which the positioning device 100 has received the observation data.

The approximate position and the satellite position will also be referred to collectively as autonomous positioning results.

Note that the approximate position/satellite position calculation section 101 corresponds to an example of a positioning section.

A correction data creation section 102 acquires the reinforcement information 400 from the QZS signal processing section 1004, and also acquires the autonomous positioning results (the approximate position and the satellite position) from the approximate position/satellite position calculation section 101, and calculates correction data from the reinforcement information 400 and the autonomous positioning results (the approximate position and the satellite position).

The correction data indicates errors expected to be included in the observation data 501 that is received at the positioning point from each GPS satellite 300.

An observation data error correction section 104 performs double difference calculation, and outputs double difference data of the observation data 501.

The double difference data indicates an amount obtained by subtracting observation data of a master satellite (observation data which has been corrected by using the correction data) from observation data of a slave satellite (observation data which has been corrected by using the correction data).

A positioning calculation section 105 performs highly accurate positioning on the order of centimeters by using a geometric distance from the GPS satellite 300 to the positioning point, the double difference data from the observation data error correction section 104, and the correction data.

4.1. Correction Data Creation Section 102

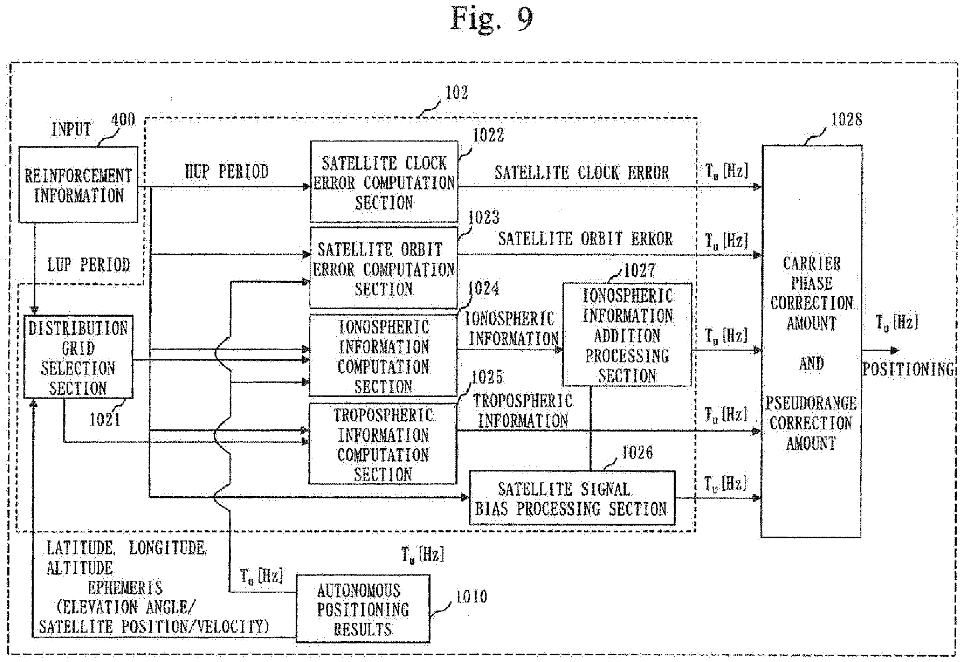

FIG. 9 illustrates an example of a configuration of the correction data creation section 102.

As illustrated in FIG. 9, the correction data creation section 102 acquires the reinforcement information 400 as well as autonomous positioning results 1010 of the approximate position/satellite position calculation section 101, generates correction data 1028, and outputs the correction data 1028.

The correction data 1028 includes a carrier phase correction amount and a pseudo-range correction amount.

Among the errors included in the reinforcement information 400, the satellite clock error is updated and input to a satellite clock error computation section 1022 every five seconds (HUP period), as illustrated in FIG. 6.

While the satellite orbit error and the tropospheric delay error are updated every 30 seconds, an update value is input to a satellite orbit error computation section 1023 and a tropospheric information computation section 1025, respectively, every five seconds based on the consistency (LUP period).

The ionospheric delay error is updated and input to an ionospheric information computation section 1024 every 30 seconds (LUP period).

The correction data creation section 102 has a distribution grid selection section 1021, the satellite clock error computation section 1022, the satellite orbit error computation section 1023, the ionospheric information computation section 1024, the tropospheric information computation section 1025, a satellite signal bias processing section 1026, and an ionospheric information addition processing section 1027.

This embodiment is characterized mainly by the operation of the distribution grid selection section 1021, and thus the operation of the distribution grid selection section 1021 will be mainly described hereinafter.

The operation of the ionospheric information computation section 1024 and the ionospheric information addition processing section 1027 will be described in a second embodiment, and the operation of the tropospheric information computation section 1025 will be described in a third embodiment.

Note that the ionospheric information computation section 1024 and the ionospheric information addition processing section 1027 correspond to an example of a delay error computation section.

The operation of the satellite clock error computation section 1022, the satellite orbit error computation section 1023, and the satellite signal bias processing section 1026 will be described in a fifth embodiment.

4.2. Distribution Grid Selection Section 1021

The distribution grid selection section 1021 selects four electronic reference points from among five or more electronic reference points.

The distribution grid selection section 1021 selects the four electronic reference points such that the current position of the positioning device 100 is included in a quadrangular area formed by the four electronic reference points and the shape of the quadrangular area closely resembles a square.

The distribution grid selection section 1021 stores electronic reference point information which indicates the locations of all 350 electronic reference points placed throughout Japan.

Then, the distribution grid selection section 1021 selects the four electronic reference points such that the current position of the positioning device 100 is included in the quadrangular area formed by the four electronic reference points and the shape of the quadrangular area most closely resembles a square, based on the location of each electronic reference point indicated in the electronic reference point information and the approximate position of the positioning device 100 included in the autonomous positioning results 1010.

The distribution grid selection section 1021 corresponds to an example of an electronic reference point position information storage section and an electronic reference point selection section.

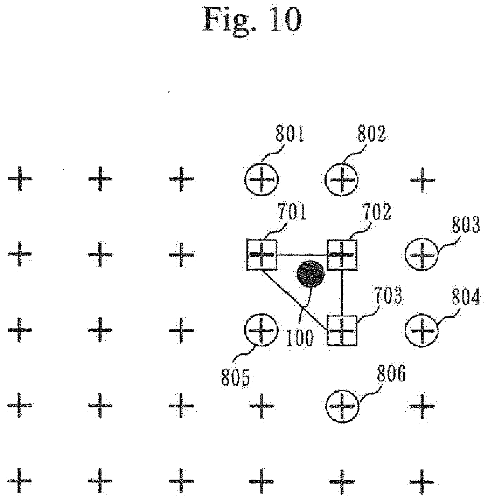

FIG. 10 is a diagram for describing processing to select electronic reference points by the distribution grid selection section 1021.

FIG. 10 illustrates an example in which the distribution grid selection section 1021 selects four electronic reference points from among nine electronic reference points.

In FIG. 10, a reference numeral 100 indicates the current position of the positioning device 100.

Each + symbol indicates the location of each electronic reference point.

The + symbols each enclosed in a square symbol are three electronic reference points that form a Delaunay triangle to be described later (reference numerals 701, 702, and 703).

The + symbols each enclosed in a circle are six electronic reference points other than the three electronic reference points forming the Delaunay triangle among the nine electronic reference points (reference numerals 801 to 806).

These six electronic reference points correspond to selection candidate electronic reference points.

The distribution grid selection section 1021 selects one electronic reference point from among these six selection candidate electronic reference points so as to select a total of four electronic reference points together with the three electronic reference points included in the Delaunay triangle.

First, an overview of the operation of the distribution grid selection section 1021 will be described.

1) The distribution grid selection section 1021 selects N (N ≥ 5) electronic reference points close to the positioning device 100.
The distribution grid selection section 1021 selects nine points from among all the electronic reference points in a descending order of nearness to the positioning device 100, for example.
2) Then, the distribution grid selection section 1021 selects three electronic reference points that form a Delaunay triangle including therein the current position of the positioning device 100 from among the N electronic reference points selected in 1) above.
3) Then, the distribution grid selection section 1021 selects a last electronic reference point according to a logic to be described below from among the remaining N-3 electronic reference points.

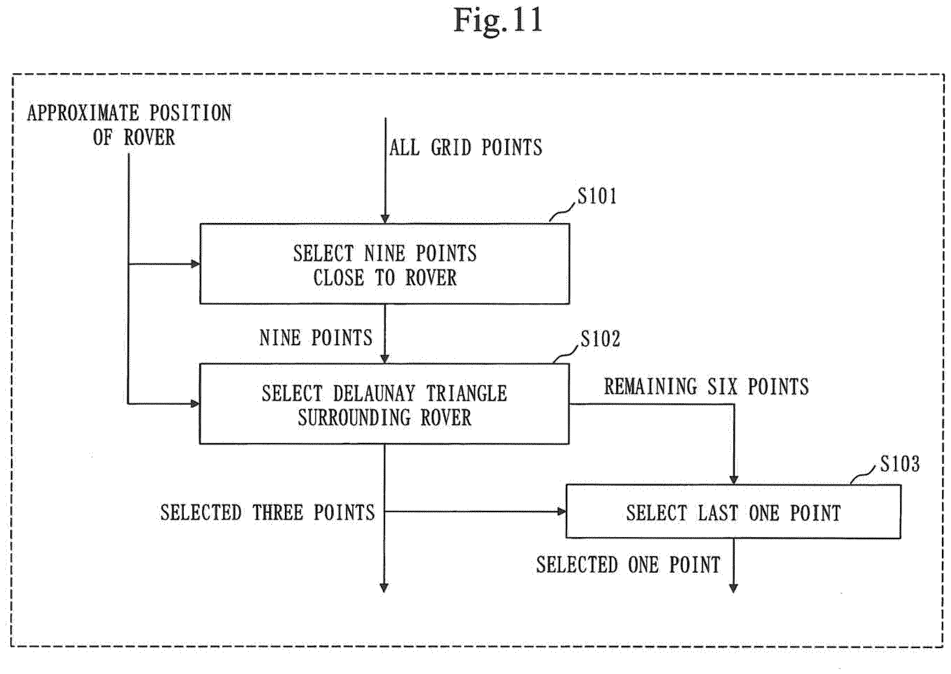

With reference to FIG. 11, the example of the operation of the distribution grid selection section 1021 will now be described in more detail.

Note that N = 9 in FIG. 11.

The distribution grid selection section 1021 selects nine grid points close to the rover (the positioning device 100) from among all the grid points (step S101).

Then, the distribution grid selection section 1021 creates a Delaunay triangle surrounding the rover from the nine grid points selected in step S101 (three points are selected from among the nine points) (step S102).

The distribution grid selection section 1021 treats all of the remaining six points as selection candidate electronic reference points, and performs calculations (a) and (b) below to select a last electronic reference point from among the six selection candidate electronic reference points (step S103).

(a) A combination of a total of four points consisting of the three points selected in step S102 and one candidate point is considered. A distance between two points is calculated for every combination of two points in the combination of the four points to obtain the maximum value of the distance.
(b) Among all the candidate points, the candidate point that produces the smallest maximum value of the distance between two points when paired with one of the three points selected in step S102, which is calculated in (a), is determined as the last point.

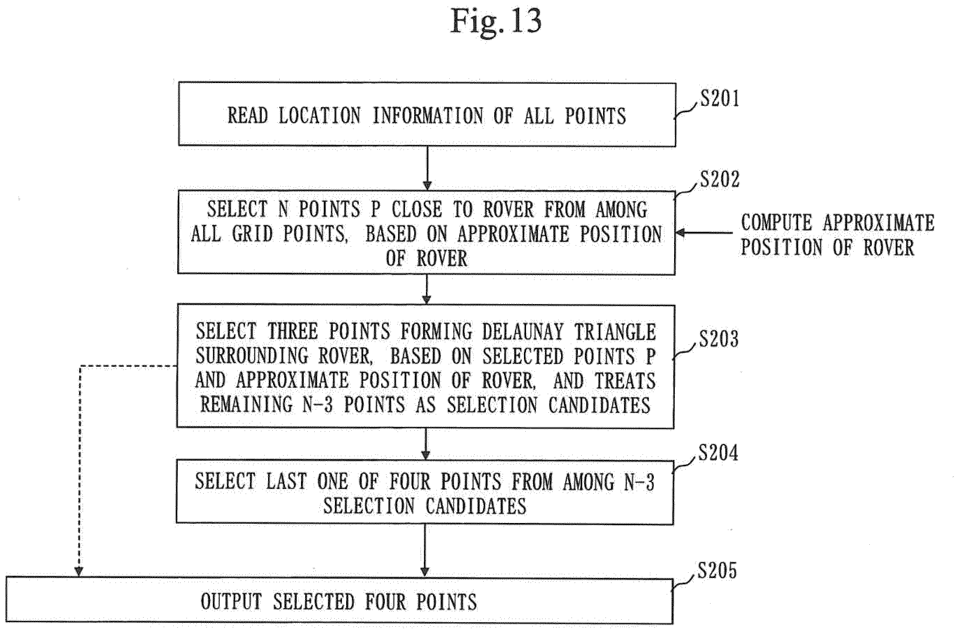

With reference to the flowchart in FIG. 13, steps S101 to S103 illustrated in Fig.11 will be described in more detail.

The distribution grid selection section 1021 reads location information of all the grid points from a storage area (step S201).

Then, the distribution grid selection section 1021 acquires the current approximate position of the rover (the positioning device 100) from the autonomous positioning results 1010, and based on the approximate position of the rover, selects N points close to the rover from among all the grid points (step S202).

In the example in FIG. 10, the distribution grid selection section 1021 selects grid points 701 to 703 and 801 to 806.

Then, the distribution grid selection section 1021 selects three points that form a Delaunay triangle surrounding the rover, based on the locations of the N grid points selected in step S202 and the approximate position of the rover, and treats the remaining (N-3) points as selection candidates (step S203).

In the example in FIG. 10, the distribution grid selection section 1021 selects the grid points 701 to 703, and treats the grid points 801 to 806 as the selection candidates.

Then, the distribution grid selection section 1021 selects a last one of the four points from among the (N-3) selection candidate points (step S204).

In the example in FIG. 10, the grid point 805 is selected, for example.

Lastly, the distribution grid selection section 1021 outputs the selected four points (the grid points 701 to 703 and 805 in the example in FIG. 10) to the ionospheric information computation section 1024 and the tropospheric information computation section 1025 (step S205).

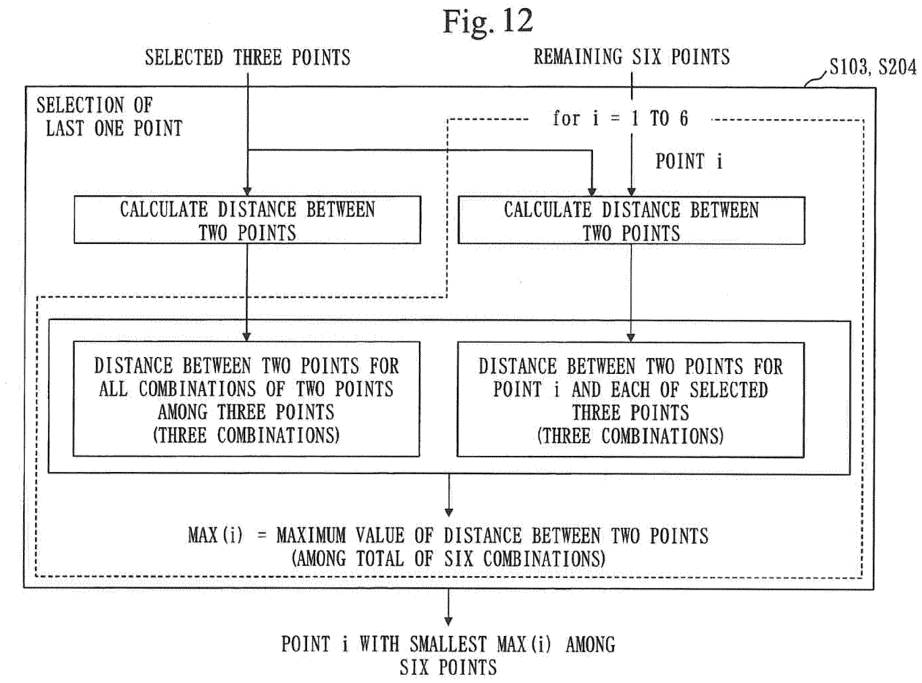

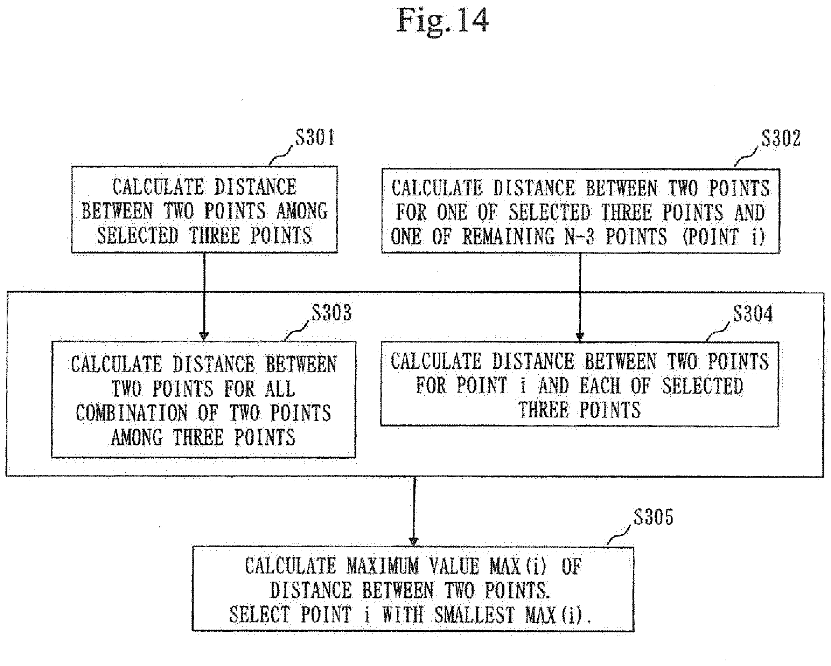

With reference to FIG. 12 and FIG. 14, processing in step S103 in FIG. 11 and processing in step S204 in FIG. 13 will now be described in more detail.

First, the distribution grid selection section 1021 calculates a distance between every pair of two points among the selected three points (step S301, step S303 in FIG. 14).

The distribution grid selection section 1021 also calculates a distance between two points for every pair of one of the selected three points and one of the remaining N points (selection candidates) (step S302, step S304 in FIG. 14).

In the example in FIG. 10, in step S301 and step S303, the distribution grid selection section 1021 calculates a distance between the grid point 701 and the grid point 702, calculates a distance between the grid point 702 and the grid point 703, and calculates a distance between the grid point 701 and the grid point 703.

In steps S302 and S304, the distribution grid selection section 1021 calculates, for example, a distance between the grid point 701 and the grid point 801, calculates a distance between the grid point 701 and the grid point 802, and similarly calculates a distance between the grid point 701 and each of the grid points 803, 804, 805, and 806.

Similarly, the distribution grid selection section 1021 also calculates a distance between the grid point 702 and each of the grid points 801 to 806 and a distance between the grid point 703 and each of the grid points 801 to 806.

Then, the distribution grid selection section 1021 calculates the maximum value MAX(i) of the distance between two points, and further selects a point i with the smallest MAX(i) (step S 305 in FIG. 14).

In the example in FIG. 10, the distribution grid selection section 1021 extracts the greatest MAX(i) of the distance between two points with regard to each of the grid points 801 to 806.

For example, with regard to the grid point 801, the distribution grid selection section 1021 selects the greatest distance from among six distances of the distance between the grid point 701 and the grid point 702, the distance between the grid point 702 and the grid point 703, the distance between the grid point 701 and the grid point 703, the distance between the grid point 701 and the grid point 801, the distance between the grid point 702 and the grid point 801, and the distance between the grid point 703 and the grid point 801.

In the arrangement of the grid points in FIG. 10, the distance between the grid point 703 and the grid point 801 is selected as MAX(801).

Similarly, MAX(802) to MAX(806) are selected.

Then, the distribution grid selection section 1021 selects the grid point that has the smallest value among MAX(801) to MAX(806) as the last point.

In the example in FIG. 10, MAX(805) (the distance between the grid point 702 and the grid point 805) is the smallest, so that the grid point 805 is selected as the last point.

By selecting the four grid points as described above, it is possible to select, from among a plurality of combinations of four grid points extracted from among N grid points, a combination of four grid points such that the current position of the rover is included in a quadrangular area formed by the four grid points and the shape of the quadrangular area closely resembles a square.

In the above, the case where the points surrounding the approximate position of the rover are N = 9 points has been mainly described.

However, the N points surrounding the approximate position of the rover may be selected such that N = 5 points, 8 points, 9 points, 12 points, 16 points, and so on.

The N grid points surrounding the approximate position of the rover are selected as described below, for example.

(1) When N = 9 Points

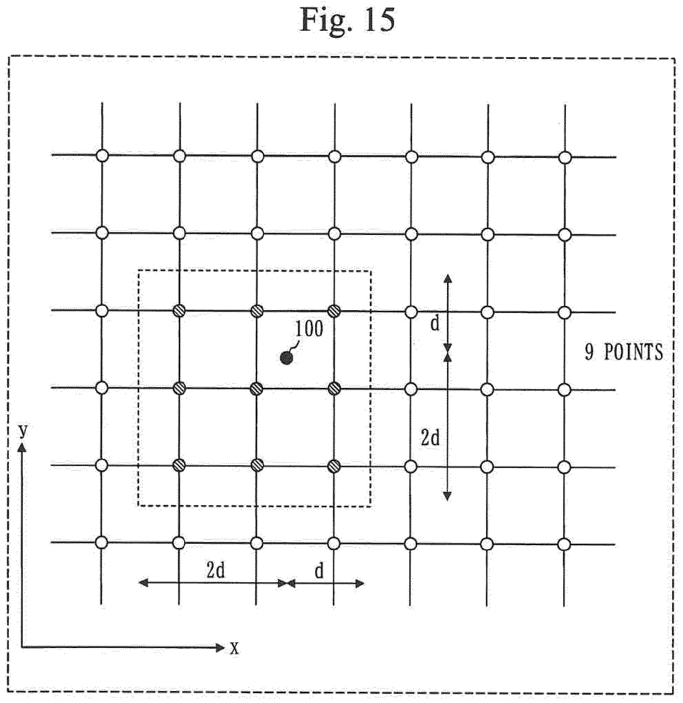

As illustrated in FIG. 15, the distribution grid selection section 1021 creates a quadrangle (dotted line in FIG. 15) by taking a distance d (d being an interval between grid points) in a positive x direction from the approximate position of the rover (x, y), taking a distance 2d in a negative x direction, taking the distance d in a positive y direction, and taking the distance 2d in a negative y direction.

Then, the distribution grid selection section 1021 selects nine points that exist within this quadrangle and are close to the approximate position of the rover (x, y).

In FIG. 15, the nine hatched points are the selected grid points.

An example in which the distance d is taken in the positive direction and the distance 2d is taken in the negative direction has been described herein. Conversely, the distance 2d may be taken in the positive direction and the distance d may be taken in the negative direction.

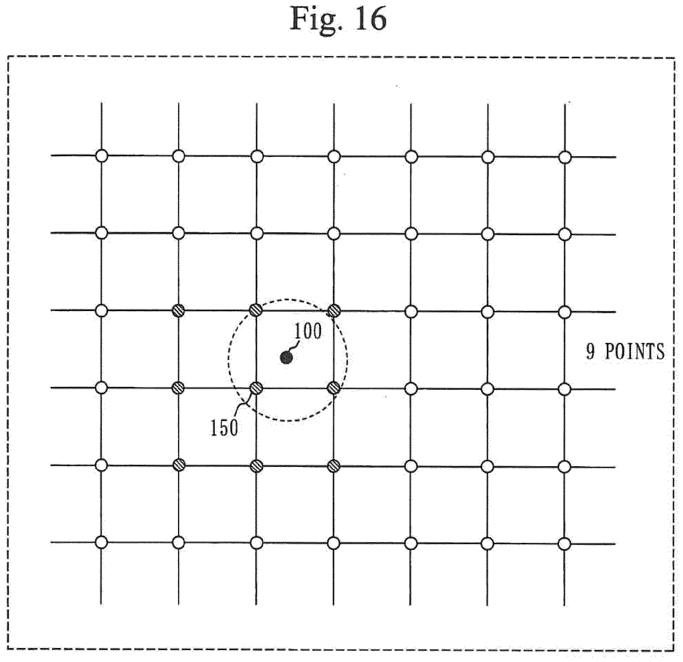

Alternatively, the nine grid points may be selected by a method illustrated in FIG. 16.

According to the method in FIG. 16, the distribution grid selection section 1021 selects a point closest to the approximate position of the rover (x, y) within a circle of radius d centered at the approximate position of the rover (x, y).

In an example in FIG. 16, the distribution grid selection section 1021 selects a grid point 150.

Then, the distribution grid selection section 1021 selects a total of nine points consisting of the grid point 150 and eight points surrounding the grid point 150.

In FIG. 16, the nine hatched points are the selected grid points.

Alternatively, the distribution grid selection section 1021 obtains a velocity and a movement direction (a travelling direction) of the rover, based on a temporal change in the approximate position of the rover (x, y).

If the obtained velocity of the rover is equal to or above a threshold value, that is, faster than the threshold value, the distribution grid selection section 1021 draws, in the movement direction, a circle of radius 2d centered at the approximate position of the rover and selects a grid point 150 within this circle. If M grid points 150 that have been selected is less than a predetermined number W (for example, nine points), the distribution grid selection section 1021 may further select W-M grid points 150 as appropriate from around the W grid points.

On the other hand, if the obtained velocity of the rover is less than the threshold value and slow, the distribution grid selection section 1021 may switch to the method for selecting the grid point 150 described in "(1) When N = 9 Points" above, according to which the distance 2d is taken in the negative x direction and the distance d is taken in the positive y direction.

By using the velocity and the correction information at the grid point 150 in the movement direction in preference, it is possible to use the correction information on the grid point 150 closer to the rover even when the rover is moving.

(2) When N = 12 Points

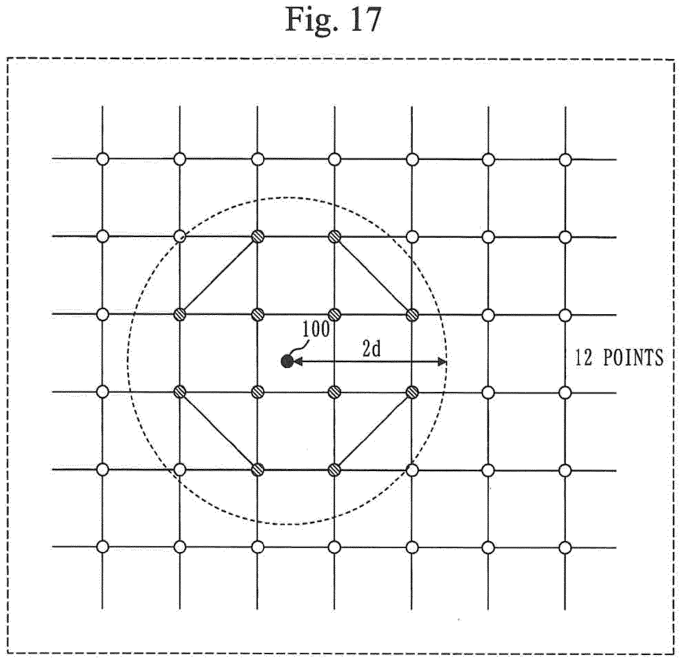

As illustrated in FIG. 17, the distribution grid selection section 1021 creates a circle of radius 2d (dotted line in FIG. 17) centered at the approximate position of the rover (x, y).

Then, the distribution grid selection section 1021 selects 12 points that exist within this circle and are close to the approximate position of the rover (x, y).

In FIG. 17, the 12 hatched points are the selected grid points.

(3) When N = 8 Points

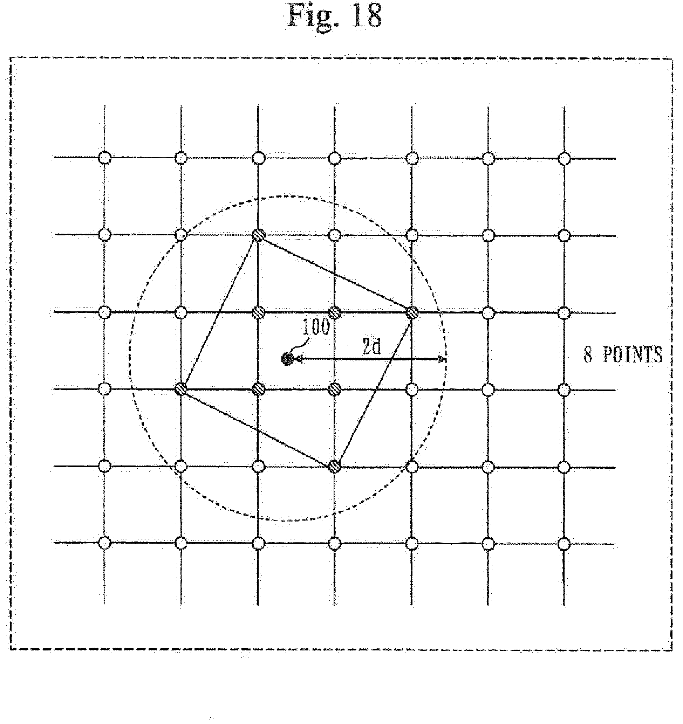

As illustrated in FIG. 18, the distribution grid selection section 1021 creates a circle of radius 2d (dotted line in FIG. 18) centered at the approximate position of the rover (x, y).

Then, the distribution grid selection section 1021 selects eight points that exist within this circle and are close to the approximate position of the rover (x, y).

In FIG. 18, the eight hatched points are the selected grid points.

(4) When N = 16 Points

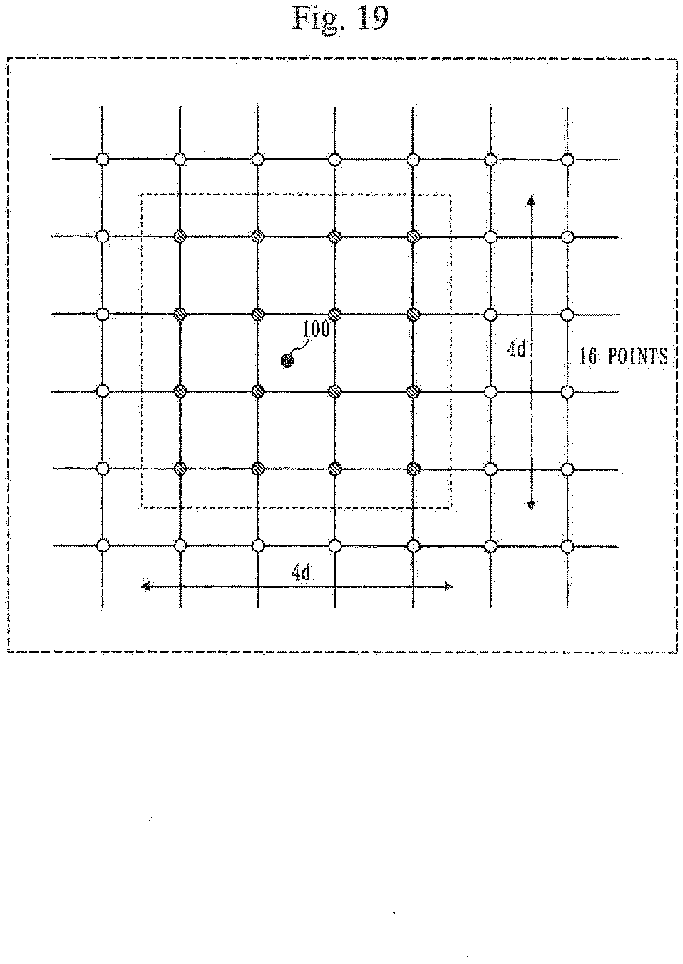

As illustrated in FIG. 19, the distribution grid selection section 1021 creates a quadrangle of 4d (dotted line in FIG. 19) centered at the approximate position of the rover (x, y).

Then, the distribution grid selection section 1021 selects 16 points that exist within this quadrangle and are close to the approximate position of the rover (x, y).

In FIG. 19, the 16 hatched points are the selected grid points.

(5) When N = 5 Points

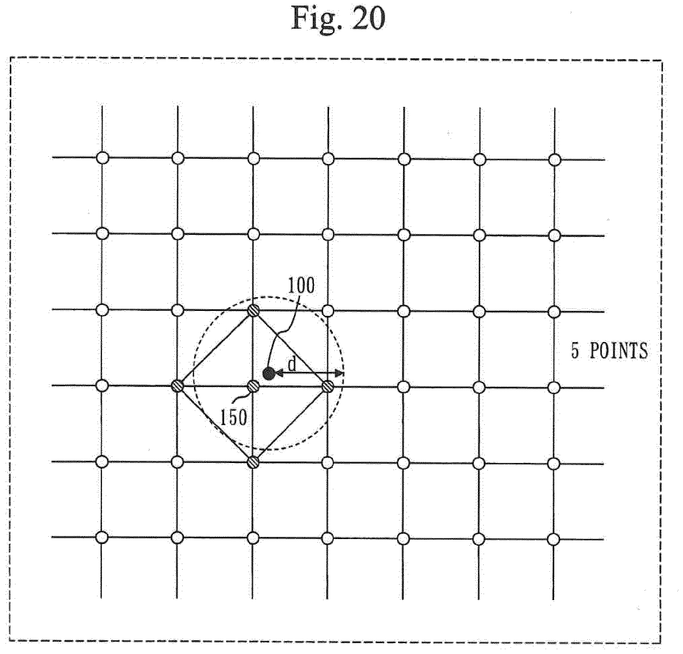

As illustrated in FIG. 20, the distribution grid selection section 1021 selects a point closest to the approximate position of the rover (x, y) within a circle of radius d centered at the approximate position of the rover (x, y).

In the example in FIG. 20, the distribution grid selection section 1021 selects the grid point 150.

Then, the distribution grid selection section 1021 selects a total of five points consisting of the grid point 150 and four points surrounding the grid point 150.

In FIG. 20, the five hatched points are the selected grid points.

The grid points are not placed at precisely equal intervals.

The grid points are placed at locations where the rover is more likely to exist according to geographical features such as a coastline and a mountain (for example, when there is a coastline, a grid point is placed nearer to the land than to the sea). For this reason, a quadrangle formed by four adjacent grid points is slightly distorted to be shaped like a parallelogram, a trapezoid, or the like rather than a square.

Furthermore, the rover is a mobile body, so that the position thereof moves as time passes.

Accordingly, the area surrounded by the N grid points close to the rover changes with time, so that it is desirable that more than five points be selected as N.

Thus, taking into account that the quadrangle formed by the four adjacent grid points includes a distortion, it is desirable to select the value of N such that the number of grid points is more than four and small.

As the value of N rises, the number of computations increases, so that eight points and nine points are more desirable than 12 points and 16 points in terms of computation time and computation load.

Nine points are selected in a simpler manner than eight points, so that nine points are more desirable than eight points in terms of computation time and computation load.

4.3. Description of Functional Effects

In this embodiment, a candidate point is selected as the last grid point such that the distance between two points among the selected four points is small.

This allows selection of a quadrangle formed by four points surrounding the rover (the positioning device) with little distortion from a square.

As described above, in this embodiment, the quadrangle surrounding the rover has little distortion from a square (the quadrangle closely resembles a square), so that there is little variation in the positioning error at each of the four points, and positioning correction can be performed accurately using each of the selected points.

Note that little distortion (i.e., closely resembling a square) signifies that there is a low degree of difference in the lengths of sides and the measures of angles from the shape of a square in which the four sides are of an equal length and the angles between two sides are equal (90°).

For example, a ratio of a length A of a reference side to a length B of another side is obtained, and it is assumed that the lengths of the sides are more equal as an average value of the ratios is closer to 1 (closer to a rhombus).

Each of the four angles is divided by 90°, and it is assumed that the measures of the angles are more equal as an average value of the ratios is closer to 1 (closer to a rectangle).

Note that some kind of appropriate shape function representing a quadrangle may be set, and the degree of distortion may be specified by performing some kind of evaluation so as to reduce the distortion from a square.

Furthermore, in this embodiment, the three points forming the Delaunay triangle surrounding the rover are used as three base points of the four points, so that selection of the four points can be simplified and calculation load can be reduced.

The four points can be selected by a total of 24 calculations which are

(1) calculations of the distance between two points for all combinations of two points in the three points forming the Delaunay triangle, that is, $_3C_2$ = six calculations (each calculation is required only once), and
(2) calculations of the distance between two points for each candidate points and each one of the three points of the Delaunay triangle, that is, (candidate points) $\times$ 3 (points) = 18 calculations.

It may be arranged that the N grid points are selected such that grid points located in the movement direction of the positioning device 100 are selected in preference, thereby allowing the correction information at grid points closer to the positioning device 100 to be used in preference even when the positioning device 100 moves.

Second Embodiment

In the first embodiment, there has been described the method for selecting four nearby grid points in order to accurately calculate the position of the rover. In the second embodiment, there will be described a method for calculating an ionospheric delay by using positioning results at the selected four grid points.

4.4. Ionospheric Information Computation Section 1024

The ionospheric information computation section 1024 calculates an ionospheric delay at the current position of the positioning device 100 by using ionospheric delays (ionospheric information included in the reinforcement information 400) at the four grid points selected by the distribution grid selection section 1021.

An example of the operation of the ionospheric information computation section 1024 will be described below.

The ionospheric information computation section 1024 calculates the ionospheric delay according to steps 1 to 3 below.

Step 1: When the ionospheric information has been updated in the reinforcement information 400 transmitted from the quasi-zenith satellite 200, the ionospheric information computation section 1024 acquires, from the distribution grid selection section 1021, coordinate values (latitude, longitude) of the four grid points selected according to the method of the first embodiment as $(lat_1, lon_1) ... (lat_4, lon_4)$.

Step 2: The ionospheric information computation section 1024 obtains a value of an ionospheric delay $ION^{PRN}_k$ in a slant (line-of-sight direction) by using the following formula for each grid point k, where k = 1 to 4 in the coordinate values of the distribution grid points $(lat_1, lon_1) ... (lat_4, lon_4)$.

Formula 1

$$ION^{PRN}_k = a^{PRN}(lat_k - lat_{org}) + b^{PRN}(lon_k - lon_{org})$$
$$+ c^{PRN}(lat_k - lat_{org})(lon_k - lon_{org}) + d^{PRN} + \delta ION^{PRN}_k$$

Note that $a^{PRN}$, $b^{PRN}$, $c^{PRN}$, and $d^{PRN}$ in the above formula denote Ionosphere global values included in the ionospheric information transmitted from the quasi-zenith satellite 200 with regard to each GPS satellite 300, and $\delta ION$ denotes an Ionosphere delta value included in the ionospheric information transmitted from the quasi-zenith satellite 200 with regard to each GPS satellite 300.

Also note that $lat_{org}$ and $lon_{org}$ denote origin coordinate values (latitude, longitude) in the grid.

The coordinate values of a distribution grid point with the smallest grid ID are used as the origin coordinate values (latitude, longitude), regardless of whether the satellite is visible or invisible.

Step 3: Next, the ionospheric information computation section 1024 performs the following processing with a period $T_u$ [Hz] until the ionospheric information is updated.

Using the ionospheric delay $ION^{PRN}_k$ (k = 1 to 4) regarding the four points obtained in step 2, the ionospheric information computation section 1024 obtains an ionospheric delay at the user position (the position of the rover, i.e., the position of the positioning device).

First, using the autonomous positioning results $lat_{user}$ and $lon_{user}$ of the rover, the distribution grid selection section 1021 selects four distribution grid points close to and surrounding $lat_{user}$ and $lon_{user}$ from among nine distribution grid points of k = 1 to 9 according to the grid selection method based on FIG. 11 and FIG. 12.

The ionospheric information computation section 1024 performs the following calculation only if this selection can be made (satellites that are visible at all of the selected four grid points are used).

The ionospheric information computation section 1024 calculates an ionospheric delay amount $ION^{PRN}_{user}$ in the slant direction at the user position $lat_{user}$, $lon_{user}$ with regard to each satellite for the selected grid points $(lat_1, lon_1)$ ... $(lat_4, lon_4)$ by spatial interpolation indicated in the following formula.

Calculation is performed with the period $T_u$ [Hz], and a calculation result is used as an input value for computing a carrier phase correction amount and a pseudo-range correction amount as defined by "RTCM 10402.3".

$$\text{Formula 2}$$

$$
\begin{bmatrix}
lat_1 - lat_1 & lon_1 - lon_1 & (lat_1 - lat_1)(lon_1 - lon_1) & 1 \\
lat_2 - lat_1 & lon_2 - lon_1 & (lat_2 - lat_1)(lon_2 - lon_1) & 1 \\
lat_3 - lat_1 & lon_3 - lon_1 & (lat_3 - lat_1)(lon_3 - lon_1) & 1 \\
lat_4 - lat_1 & lon_4 - lon_1 & (lat_4 - lat_1)(lon_4 - lon_1) & 1
\end{bmatrix}
\begin{bmatrix}
e \\ f \\ g \\ h
\end{bmatrix}
=
\begin{bmatrix}
ION^{PRN}_1 \\ ION^{PRN}_2 \\ ION^{PRN}_3 \\ ION^{PRN}_4
\end{bmatrix}
$$

Note that $ION^{PRN}_k$ is the value obtained in step 2 and the ionospheric information computation section 1024 obtains $[e\ f\ g\ h]^T$ from the above determinant and assigns it to the following formula.

**[0063]** $\underline{\text{Formula 3}}$

$$ION^{PRN}_{user} = e(lat_{user} - lat_1) + f(lon_{user} - lon_1) + g(lat_{user} - lat_1)(lon_{user} - lon_1) + h$$

The value of $ION^{PRN}_{user}$ changes with time as the position of the positioning device 100 changes.

As the position of the positioning device 100 changes, the distribution grid points used for spatial interpolation may also change.

4.5. Ionospheric Information Addition Processing Section 1027

In the reinforcement information 400 on the order of centimeters transmitted from the quasi-zenith satellite 200, a temporal variation during the update period is not compensated with regard to the frequency-dependent terms (the ionospheric information and the satellite signal bias).

Thus, the ionospheric information addition processing section 1027 performs additional processing on the ionospheric information, and compensation amounts for the temporal variations in the frequency-dependent terms can be thereby calculated.

An example of performing linear extrapolation will be described as an example of calculating the compensations for the temporal variations in the frequency-dependent terms.

Linear extrapolation is a function of updating the value during the update period by using an ionospheric delay ION output from the ionospheric information computation section 1024 as well as the latest value and the immediately preceding value of the satellite signal bias that have been transmitted.

Note that two pieces of data used for linear extrapolation are not available during a maximum of 60 seconds after a transmitted L6 message starts to be received, and it is therefore assumed that the reinforcement information 400 at the initial update time is directly used.

Linear extrapolation is performed on the following frequency-dependent terms for L1 and L2.

Formula 4

$$L1\mathrm{Disp}(t) = -\mathrm{ION}(t) + L1\mathrm{bias}(t) - L0\mathrm{bias}(t)$$

$$L2\mathrm{Disp}(t) = -\left(\frac{f_1}{f_2}\right)^2 \mathrm{ION}(t) + L2\mathrm{bias}(t) - L0\mathrm{bias}(t)$$

The ionospheric information addition processing section 1027 obtains the compensation amounts for the temporal variations in the frequency-dependent terms according to the following formula by using the latest value and the immediately preceding value, where t is the GNSS time held by the receiver 1002, $t_0$ is the update time of the latest value, and $t_{-1}$ is the update time of the immediately preceding value.

Formula 5

$$\mathrm{CompensateL1Disp}(t) = \frac{L1\mathrm{Disp}(t_0) - L1\mathrm{Disp}(t_{-1})}{(t_0 - t_{-1})} \times (t - t_0)$$

$$\mathrm{CompensateL2Disp}(t) = \frac{L2\mathrm{Disp}(t_0) - L2\mathrm{Disp}(t_{-1})}{(t_0 - t_{-1})} \times (t - t_0)$$

The ionospheric information addition processing section 1027 uses these values together with the ionospheric delay amount as input values for computing carrier phase correction information and pseudo-range correction information as defined by "RTCM 10402.3" with the period $T_u$ [Hz].

Third Embodiment

In the second embodiment, there has been described the method for calculating the ionospheric delay by using the positioning results at the four selected grid points. In the third embodiment, there will be described a method for calculating a tropospheric delay by using positioning results at four grid points.

4.6. Tropospheric Information Computation Section 1025

The tropospheric information computation section 1025 calculates a tropospheric delay at the current position of the positioning device 100 by using tropospheric delays (tropospheric information included in the reinforcement information 400) at the four grid points selected by the distribution grid selection section 1021.

An example of the operation of the tropospheric information computation section 1025 will be described below.

The tropospheric information computation section 1025 calculates the tropospheric delay according to steps 1 to 3 below.

Step 1: The tropospheric information computation section 1025 acquires, from the distribution grid selection section 1021, the coordinate values (latitude, longitude) of the four distribution grid points selected according to the method of the first embodiment as $(lat_1, lon_1)$ ... $(lat_4, lon_4)$.

Step 2: When the tropospheric information has been updated in the reinforcement information 400 transmitted from the quasi-zenith satellite 200, the tropospheric information computation section 1025 obtains scale factors $\delta T^{vd}_k$ and $\delta T^{vw}_k$ at each grid point k by using the following formula, where k = 1 to 4 in the coordinate values of the distribution grid points $(lat_1, lon_1)$ ... $(lat_4, lon_4)$.

Formula 6

$$\delta T_k^{vd} = 1 + \frac{T_{k\_ssr}^{vd} - T_{k\_std}^{vd}}{T_{k\_std}^{vd}}, \quad \delta T_k^{vw} = 1 + \frac{T_{k\_ssr}^{vw} - T_{k\_std}^{vw}}{T_{k\_std}^{vw}}$$

Note that $\delta T^{vd}_k$ and $\delta T^{vw}_k$ denote a variation in tropospheric information (dry atmosphere) $T^{vd}_{k\_ssr}$ and a variation in tropospheric information (water vapor) $T^{vw}_{k\_ssr}$, respectively.

Step 3: The tropospheric information computation section 1025 obtains scale factors $\delta T^{vd}_{user}$ and $\delta T^{vw}_{usr}$ of the user position (the position of the rover, i.e., the position of the positioning device 100) by using the scale factors $\delta T^{vd}_k$ and $\delta T^{vw}_k$ for the four points obtained in step 2.

Using the autonomous positioning results $lat_{user}$ and $lon_{user}$ of the user, the distribution grid selection section 1021 selects four grid points close to and surrounding $lat_{user}$ and $lon_{user}$.

The method for selecting grid points is as described with reference to FIGs. 11 and 12.

This also does not take into account whether the satellite is visible or invisible.

Spatial interpolation is performed on the scale factors $\delta T^{vd}_k$ and $\delta T^{vw}_k$ of the selected distribution grid points similarly to the computation of the ionospheric delay so as to obtain scale factors $\delta T^{vd}_{user}$ and $\delta T^{vw}_{usr}$ at the user position.

Formula 7

$$\begin{bmatrix} lat_1 - lat_1 & lon_1 - lon_1 & (lat_1 - lat_1)(lon_1 - lon_1) & 1 \\ lat_2 - lat_1 & lon_2 - lon_1 & (lat_2 - lat_1)(lon_2 - lon_1) & 1 \\ lat_3 - lat_1 & lon_3 - lon_1 & (lat_3 - lat_1)(lon_3 - lon_1) & 1 \\ lat_4 - lat_1 & lon_4 - lon_1 & (lat_4 - lat_1)(lon_4 - lon_1) & 1 \end{bmatrix} \begin{bmatrix} e \\ f \\ g \\ h \end{bmatrix} = \begin{bmatrix} \delta T_1^{vd} \\ \delta T_2^{vd} \\ \delta T_3^{vd} \\ \delta T_4^{vd} \end{bmatrix}$$

Note that $\delta T^{vd}_{user}$ is the value obtained in step 2, and the tropospheric information computation section 1025 obtains $[e\ f\ g\ h]^T$ from the above determinant and assigns it to the following formula.

Formula 8

$$\delta T_{user}^{vd} = e(lat_{user} - lat_1) + f(lon_{user} - lon_1) + g(lat_{user} - lat_1)(lon_{user} - lon_1) + h$$

Similarly, the tropospheric information computation section 1025 also obtains $\delta T^{vd}_{user}$.

The tropospheric information computation section 1025 also calculates tropospheric models $T^{vd}_{user\_std}$ and $T^{vw}_{user\_std}$ at the position of the autonomous positioning results of the user (the tropospheric models will be described later).

Then, the tropospheric information computation section 1025 calculates a mapping function for dry atmosphere and water vapor by using the satellite elevation angle of each satellite and the day of the year.

Using the above, the tropospheric information computation section 1025 calculates a tropospheric delay amount $TROP^{PRN}_{user}$ in the slant direction at the position of the autonomous positioning results of the user according to the following formula.

It is calculated with the period $T_u$ [Hz], and is used as an input value for computing the carrier phase correction amount and the pseudo-range correction amount as defined by "RTCM 10402.3".

Formula 9

$$TROP_{user}^{PRN}(t) = T_{user\_std}^{vd}(t) \cdot \delta T_{user}^{vd} \cdot m_d(e(t), DOY) + T_{user\_std}^{vw}(t) \cdot \delta T_{user}^{vw} \cdot m_w(e(t), DOY)$$

Note that t is the GNSS time held by the receiver 1002 when this computation is performed.

The values of the scale factors $\delta T^{dv}_k$ and $\delta T^{dw}_k$ at the grid point to be used remain constant until the next update time, but the value of $TROP^{PRN}_{user}$ changes with time as the position of the positioning device 100 changes and the mapping function changes.

As the position of the positioning device 100 changes, the grid points to be selected for spatial interpolation also change.

### 4.7. Mapping Function

As the tropospheric model, the MOPS model of RTCA, a standard atmosphere model, and the Saastamoinen model for obtaining a delay amount in a vertical direction are used, for example.

As the mapping function, the Niell mapping function is used.

The tropospheric model and the mapping function are calculated based on the autonomous positioning results.

If the autonomous positioning results have not been able to be obtained, the previous values are used.

### Fourth Embodiment

In the second and third embodiments, the positioning errors are corrected in the positioning device 100 by using the ionospheric information or the tropospheric information at every four selected grid points.

In a fourth embodiment, a method for selecting the ionospheric information or tropospheric information of a distribution grid point will be described.

### 4.8. Allowable Range for Reinforcement Information

The positioning device 100 holds in advance an allowable range (a maximum value, a minimum value) for the reinforcement information 400 (the ionospheric information, the tropospheric information, etc.) at each grid point.

More specifically, the ionospheric information computation section 1024 stores the maximum value and the minimum value for the ionospheric information, and the tropospheric information computation section 1025 stores the maximum value and the minimum value for the tropospheric information.

In this embodiment, the ionospheric information computation section 1024 and the tropospheric information computation section 1025 correspond to an example of an allowable range storage section.

If the received reinforcement information 400 is outside of the allowable range, the positioning device 100 uses a boundary value of the allowable range which is close to the received reinforcement information 400 as the reinforcement information 400 to be used for error correction.

Specifically, if the value of the reinforcement information received with regard to a given grid point is larger than the maximum value, error correction is performed on the positioning information at this grid point by using the maximum value held in advance instead of using the received reinforcement information 400.

If the value of the reinforcement information received with regard to a given grid point is smaller than the minimum value, error correction is performed on the positioning information at this grid point by using the minimum value held in advance instead of using the received reinforcement information 400.

These operations are performed by the ionospheric information computation section 1024 and the tropospheric information computation section 1025.

With this arrangement, even if the received reinforcement information momentarily indicates an extreme value due to occurrence of some kind of positioning problem or reception error, occurrence of error in positioning calculation can be prevented by performing the calculation after converting the extreme value to a value within the allowable range.

### Fifth Embodiment

The Fifth Embodiment comprises additional information and is outside the scope of the present invention.

The satellite clock error computation section 1022, the satellite orbit error computation section 1023, and the satellite signal bias processing section 1026 will now be described.

### 4.9. Satellite Clock Error Computation Section 1022

The satellite clock error computation section 1022 calculates a satellite clock correction amount CLK with the period $T_u$ [Hz] until the next time the satellite clock error is updated.

More specifically, the satellite clock error computation section 1022 obtains the satellite clock correction amount CLK according to the following formula by using polynomial coefficients C0[m] and C1[m/s] included in satellite clock error information transmitted and time information $t_0$ transmitted.

Calculation is performed with the period $T_u$ [Hz], and the satellite clock correction amount CLK is used as an input value for computing the carrier phase correction amount and the pseudo-range correction amount as defined by "RTCM 10402.3".

In the following formula, t is the GPS time held by the receiver 1002 when this computation is performed in the positioning device 100.

$$\underline{\text{Formula 10}}$$

$$\mathrm{CLK}(t) = \mathrm{C0} + \mathrm{C1}(t - t_0 + \mathrm{HUP}/2) \times 10^{-3} [\mathrm{m}]$$

4.10. Satellite Orbit Error Computation Section 1023

The satellite orbit error computation section 1023 calculates a satellite orbit correction amount ORB with the period $T_u$ [Hz] until the next time the satellite orbit error is updated.

The satellite orbit correction amount ORB is obtained according to the following formula by using an orbit error vector $O = (O_{radial}, O_{along}, O_{cross})$ included in satellite orbit error information.

Calculation is performed with the period $T_u$ [Hz], and the satellite orbit correction amount ORB is used as an input value for computing the carrier phase correction amount and the pseudo-range correction amount as defined by "RTCM 10402.3".

$$\underline{\text{Formula 11}}$$

$$\mathrm{ORB}(t) = \mathbf{e}_{\mathrm{LOS}}(t) \cdot \boldsymbol{\delta X}(t) \ [\mathrm{m}]$$

where

$$\mathbf{e}_{\mathrm{LOS}}(t) = \mathbf{r}(t) - \mathbf{r}_s(t)$$

$$\boldsymbol{\delta X}(t) = O_{radial}\mathbf{e}_{\mathbf{radial}}(t) + O_{along}\mathbf{e}_{\mathbf{along}}(t) + O_{cross}\mathbf{e}_{\mathbf{cross}}(t)$$

$$\mathbf{e}_{\mathbf{along}}(t) = \frac{\dot{\mathbf{r}}(t)}{\left|\dot{\mathbf{r}}(t)\right|}$$

$$\mathbf{e}_{\mathbf{cross}}(t) = \frac{\mathbf{r}(t) \times \dot{\mathbf{r}}(t)}{\left|\mathbf{r}(t) \times \dot{\mathbf{r}}(t)\right|}$$

$$\mathbf{e}_{\mathbf{radial}}(t) = \mathbf{e}_{\mathbf{along}}(t) \times \mathbf{e}_{\mathbf{cross}}(t)$$

In the above formula, t is the GPS time held by the receiver 1002 when this computation is performed in the positioning device 100.

Note that r and r• (• above r) denote a position vector and a velocity vector, respectively, in an ECEF coordinate system obtained by coordinate conversion from ECI coordinates, $r_s$ denotes a position vector of the positioning device 100 in the ECEF coordinate system obtained by coordinate conversion from ECI coordinates, and $e_{LOS}$ denotes a relative position vector, in the ECEF coordinate system, of the GPS satellite 300 in relation to the positioning device 100.

Therefore, all the vectors in the above formulas are vectors in the ECEF coordinate system.

The position vector of the positioning device 100 is calculated by using the coordinate values of the autonomous positioning results 1010.

When the position of the positioning device 100 is represented by using latitude, longitude, and altitude, the WGS-84 ellipsoid or the GRS-80 ellipsoid is used as an earth model, for example.

Since there is little difference due to the shape of the ellipsoid, any ellipsoid may be employed.

Note that with regard to the values of the orbit error vector ($O_{radial}$, $O_{along}$, $O_{cross}$) that are transmitted, the positioning device 100 maintains the constant values until the next update time, whereas the value of ORB changes with time as the position and velocity vectors of the satellite change and the position of the positioning device 100 changes.

The position vector of the GPS satellite 300 is calculated according to the formula described in IS-GPS (Section 30.3.3.1.3 User Algorithm for Determination of SV Position in IS-GPS-200G) by using the Broadcast Ephemeris.

The velocity vector of the GPS satellite 300 is calculated according to the following method by using the Broadcast Ephemeris.

<u>Formula 12</u>

$$p = r_k(1 + e_n \cos v_k)$$

$$v_p = -\sqrt{\mu/p} \sin v_k, \quad v_q = \sqrt{\mu/p} \cdot (e_n + \cos v_k)$$

$$v_x^{ECI} = v_p(\cos\Omega_k \cos\omega_n - \sin\Omega_k \sin\omega_n \cos i_k) + v_q(-\cos\Omega_k \sin\omega_n - \sin\Omega_k \cos\omega_n \cos i_k)$$

$$v_y^{ECI} = v_p(\sin\Omega_k \cos\omega_n + \cos\Omega_k \sin\omega_n \cos i_k) + v_q(-\sin\Omega_k \sin\omega_n + \cos\Omega_k \cos\omega_n \cos i_k)$$

$$v_z^{ECI} = v_p \sin\omega_n \sin i_k + v_q \cos\omega_n \sin i_k$$

$$\vec{v}^{ECEF} = \begin{bmatrix} v_x^{ECI} \\ v_y^{ECI} \\ v_z^{ECI} \end{bmatrix} - \begin{bmatrix} 0 \\ 0 \\ \dot{\Omega}_e \end{bmatrix} \times \begin{bmatrix} x_k \\ y_k \\ z_k \end{bmatrix}$$

The symbols in the formulas are those that are defined in the message for the Broadcast Ephemeris in IS-GPS.

4.11. Satellite Signal Bias Processing Section 1026

Satellite signal biases are composed of satellite code biases (C1Bias and P2Bias) and satellite carrier phase biases (L1Bias and L2Bias).

There is no conversion formula for the satellite signal biases, and the satellite signal bias processing section 1026 directly uses the values included in the reinforcement information 400 on the order of centimeters.

The values of the satellite signal biases remain constant until the next update time, and the latest values are used as input values for ionospheric addition processing and for computing the carrier phase correction amount and the pseudo-range correction amount as defined by "RTCM 10402.3".

Note that the ionospheric information addition processing section 1027 uses a value called L0bias which is a linear combination of L1Bias and L2Bias.
L0bias is obtained by the following formula.

Formula 13

$$L0bias = L1Bias \times \frac{f_1^2}{f_1^2 - f_2^2} - L2Bias \times \frac{f_2^2}{f_1^2 - f_2^2}$$

$$= 2.55 \times L1Bias - 1.55 \times L2Bias$$

$$f_1 = 1575.42[MHz], \quad f_2 = 1227.60[MHz]$$

The embodiments of the present invention have been described above. Two or more of these embodiments may be implemented in combination.
Note that the present invention is not limited to these embodiments, and various modifications are possible as appropriate.

5. Example of Hardware Configuration

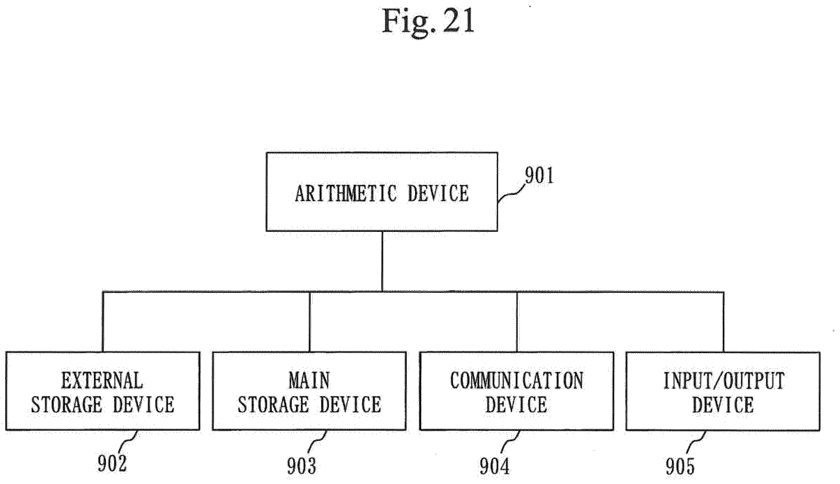

Lastly, an example of a hardware configuration of the positioning device 100 presented in the first to fifth embodiments will be described with reference to FIG. 21.
The positioning device 100 is a computer, and each element of the positioning device 100 can be implemented by a program.
As the hardware configuration of the positioning device 100, an arithmetic device 901, an external storage device 902, a main storage device 903, a communication device 904, and an input/output device 905 are connected to a bus.
The arithmetic device 901 is a CPU (Central Processing Unit) that execute programs.
The external storage device 902 is, for example, a ROM (Read Only Memory), a flash memory, and a hard disk device.
The main storage device 903 is a RAM (Random Access Memory).
The communication device 904 corresponds to the receiver 1002 in FIG. 8, and receives the observation data and the broadcast ephemeris from the GPS satellite, and also receives the reinforcement information from the quasi-zenith satellite.
The communication device 904 includes an AD (analog-digital) conversion function.
The input/output device 905 is, for example, a touch panel display device and the like.
The programs are normally stored in the external storage device 902, and are loaded into the main storage device 903 to be sequentially read and executed by the arithmetic device 901.
The programs are those that implement the functions each described as a "section" illustrated in FIG. 8.
Further, the external storage device 902 also stores an operating system (OS). At least a part of the OS is loaded into the main storage device 903, and the arithmetic device 901 executes the program for implementing the function of each "section" illustrated in FIG. 8 while executing the OS.
Information, data, signal values, and variable values indicating results of processing described as "correct", "generate", "create", "calculate", "obtain", "compute", "determine", "assess", "update", "extract", "select", "receive", and so on in the description of the first to fifth embodiments are stored as files in the main storage device 903.
Note that the configuration in FIG. 21 indicates an example of the hardware configuration of the positioning device 100, and the hardware configuration of the positioning device 100 is not limited to the configuration described in FIG. 21 and may be another configuration.

List of Reference Signs

100     positioning device
101     approximate position/satellite position calculation section
102     correction data creation section

104     observation data error correction section
105     positioning calculation section
200     quasi-zenith satellite
300     GPS satellite
400     reinforcement information
501     observation data
502     broadcast ephemeris
1001    antenna
1002    receiver
1003    GPS signal processing section
1004    QZS signal processing section
1021    distribution grid selection section
1022    satellite clock error computation section
1023    satellite orbit error computation section
1024    ionospheric information computation section
1025    tropospheric information computation section
1026    satellite signal bias processing section
1027    ionospheric information addition processing section
1028    correction data

**Claims**

1.  A positioning device (100) to be mounted to a mobile body, wherein the positioning device (100) is connected to a receiver (1002) for receiving a GPS signal from a GPS satellite (300) and reinforcement information (400) as a QZS signal from a quasi-zenith satellite , QZS, (200) via an antenna (1001), wherein the reinforcement information comprises errors resulting from the GPS satellite (300) and errors resulting from a propagation path of the GPS signal, the positioning device (100) comprising:

    - a positioning section (101) configured to acquire observation data (501) and a broadcast ephemeris (502) from the receiver (1002), and to calculate an approximate position of a positioning point and a position of each GPS satellite (300) as autonomous positioning results by using the observation data (501) and the broadcast ephemeris (502) , wherein the positioning point represents a position of the positioning device (100);
    - a correction data creation section (102) configured to acquire the reinforcement information (400) from the receiver (1002) and the autonomous positioning results from the positioning section (101) and to calculate correction data from the reinforcement information (400) and the autonomous positioning results, the correction data indicating errors expected to be included in the observation data (501) that is received at the positioning point from each GPS satellite (300);
    - an observation data error correction section (104) to calculate double difference data that is obtained by subtracting observation data of a master satellite from observation data of a slave satellite; and
    - a positioning calculation section (105) configured to perform highly accurate positioning by using a geometric distance from the GPS satellite (300) to the positioning point, the double difference data, and the correction data, wherein the correction data creation section (102) comprises;
    - an electronic reference point position information storage section (1021) configured to store electronic reference point position information indicating locations of five or more electronic reference points which are arranged in a grid pattern;
    - an electronic reference point selection section (1021) configured to select, from among a plurality of combinations of four electronic reference points extracted from among the five or more electronic reference points, a combination in which a quadrangular area formed by the four electronic reference points includes therein the approximate position of the positioning point determined by the positioning section (101) and a shape of the quadrangular area closely resembles a square, based on the approximate position of the positioning point determined by the positioning section (101) and the locations of the electronic reference points indicated in the electronic reference point position information; and
    - a delay error computation section (1024, 1027) configured to perform computation using a delay error associated with each of the four electronic reference points selected by the electronic reference point selection section (1021), **characterized in that**; the electronic reference point selection section (1021) is configured to select three electronic reference points that form a Delaunay triangle including therein the approximate position of the positioning point,

- to specify electronic reference points other than the three electronic reference points of the five or more electronic reference points, as selection candidate electronic reference points, and

- to analyze a positional relation among the three electronic reference points and a positional relation between the selection candidate electronic reference points and the three electronic reference points, and to select one of the selection candidate electronic reference points as a last one of the four electronic reference points, wherein the electronic reference point selection section (1021) is configured

- to further calculate a distance between every combination of two points of the three electronic reference points,

- to calculate, for each selection candidate electronic reference point, a distance between said selection candidate electronic reference point and each of the three electronic reference points,

- to extract, for each selection candidate reference point, a longest distance among the distance between every combination of two points of the three electronic reference points and the distance between said selection candidate electronic reference point and each of the three electronic reference points,

- to extract a shortest distance from among the longest distance extracted for each selection candidate reference point, and

- to select a selection candidate reference point corresponding to the extracted shortest distance, as the last one of the four electronic reference points.

2. The positioning device (100) according to claim 1,

wherein the electronic reference point position information storage section (1021) is configured to store electronic reference point position information indicating locations of nine or more electronic reference points,

wherein the electronic reference point selection section (1021) is configured to extract nine electronic reference points from among the nine or more electronic reference points, based on the approximate position of the positioning point,

to select three electronic reference points that form a Delaunay triangle including therein the approximate position of the positioning point from among the nine electronic reference points, and

to specify electronic reference points other than the three electronic reference points of the nine electronic reference points, as selection candidate electronic reference points.

3. The positioning device (100) according to claim 1,
wherein the delay error computation section (1024, 1027) is configured to perform computation using an ionospheric delay error associated with each of the four electronic reference points selected by the electronic reference point selection section (1021).

4. The positioning device (100) according to claim 1,
wherein the delay error computation section (1024, 1027) is configured to perform computation using a tropospheric delay error associated with each of the four electronic reference points selected by the electronic reference point selection section (1021).

5. The positioning device (100) according to claim 1, further comprising an allowable range storage section (1025) configured to store a maximum value and a minimum value for the delay error, wherein when the delay error associated with one of the electronic reference points is larger than the maximum value stored in the allowable range storage section (1025), the delay error computation section (1024, 1027) is configured to perform the computation using the maximum value instead of the delay error with regard to said electronic reference point, and when the delay error associated with one of the electronic reference points is smaller than the minimum value stored in the allowable range storage section, the delay error computation section (1024, 1027) is configured to perform the computation using the minimum value instead of the delay error with regard to said electronic reference point.

6. A positioning method performed by a positioning device (100) connected to a receiver (1002) for receiving a GPS signal from a GPS satellite (300) and reinforcement information (400) as a QZS signal from a quasi-zenith satellite, QZS, (200) via an antenna (1001), wherein the reinforcement information comprises errors resulting from the GPS satellite (300) and errors resulting from a propagation path of the GPS signal, the positioning device being a computer to be mounted to a mobile body and storing electronic reference point position information indicating locations of five or more electronic reference points which are arranged in a grid pattern, the positioning method comprising:

- a positioning step, by the positioning device (100), of acquiring observation data (501) and a broadcast ephemeris (502) from the receiver (1002), and of calculating an approximate position of a positioning point and a position of each GPS satellite (300) as autonomous positioning results by using the observation data (501)

and the broadcast ephemeris (502), wherein the positioning point represents a position of the positioning device (100);

- a correction data creation step, by the positioning device (100), of acquiring the reinforcement information (400) from the receiver (1002), and of calculating correction data from the reinforcement information (400) and the autonomous positioning results, the correction data indicating errors expected to be included in the observation data (501) that is received at the positioning point from each GPS satellite (300);

- an observation data error correction step, by the positioning device (100), of calculating double difference data that is obtained by subtracting observation data of a master satellite from observation data of a slave satellite; and

- a positioning calculation step, by the positioning device (100), of performing highly accurate positioning by using a geometric distance from the GPS satellite (300) to the positioning point, the double difference data, and the correction data, wherein the correction data creation step comprises;

- an electronic reference point selection step, by the positioning device (100), of selecting, from among a plurality of combinations of four electronic reference points extracted from among the five or more electronic reference points, a combination in which a quadrangular area formed by the four electronic reference points includes therein approximate position of the positioning point determined by the positioning step and a shape of the quadrangular area closely resembles a square, based on the approximate position of the positioning point determined by the positioning step and the locations of the electronic reference points indicated in the electronic reference point position information; and

- a delay error computation step, by the positioning device (100), of performing computation using a delay error associated with each of the four electronic reference points selected by the electronic reference point selection step, **characterized in that** in the electronic reference point selection step, the positioning device (100) selects three electronic reference points that form a Delaunay triangle including therein the approximate position of the positioning point,

- specifies electronic reference points other than the three electronic reference points of the five or more electronic reference points, as selection candidate electronic reference points, and

- analyzes a positional relation among the three electronic reference points and a positional relation between the selection candidate electronic reference points and the three electronic reference points, and selects one of the selection candidate electronic reference points as a last one of the four electronic reference points, wherein in the electronic reference point selection step, the positioning device (100) further calculates a distance between every combination of two points of the three electronic reference points,

- calculates, for each selection candidate electronic reference point, a distance between said selection candidate electronic reference point and each of the three electronic reference points,

- extracts, for each selection candidate reference point, a longest distance among the distance between every combination of two points of the three electronic reference points and the distance between said selection candidate electronic reference point and each of the three electronic reference points,

- extracts a shortest distance from among the longest distance extracted for each selection candidate reference point, and

- selects a selection candidate reference point corresponding to the extracted shortest distance, as the last one of the four electronic reference points.

7. A computer program comprising instructions for causing a positioning device (100) to carry out the method of claim 6 when the positioning device (100) is connected to a receiver (1002) which receives a GPS signal from a GPS satellite (300) and reinforcement information (400) as a QZS signal from a quasi-zenith satellite, QZS, (200) via an antenna (1001), wherein the reinforcement information comprises errors resulting from the GPS satellite (300) and errors resulting from a propagation path of the GPS signal, the positioning device being a computer to be mounted to a mobile body and storing electronic reference point position information indicating locations of five or more electronic reference points which are arranged in a grid pattern .

## Patentansprüche

1. Positionierungsvorrichtung (100), die an einem beweglichen Körper anzubringen ist, wobei die Positionierungsvorrichtung (100) mit einem Empfänger (1002) verbunden ist, um ein GPS-Signal von einem GPS-Satelliten (300) und Verstärkungsinformationen (400) als QZS-Signal von einem Quasi-Zenit-Satelliten, QZS, (200) über eine Antenne (1001) zu empfangen, wobei die Verstärkungsinformationen Fehler enthalten, die von dem GPS-Satelliten (300) resultieren, und Fehler, die von einem Übertragungspfad des GPS-Signals resultieren,

wobei die Positionierungsvorrichtung (100) Folgendes aufweist:

- einen Positionierungsbereich (101), der dazu konfiguriert ist, Beobachtungsdaten (501) und eine Sende-Ephemeride (502) von dem Empfänger (1002) zu erfassen und eine approximative Position eines Positionierungspunkts und eine Position des jeweiligen GPS-Satelliten (300) als Ergebnisse autonomer Positionierung unter Verwendung der Beobachtungsdaten (501) und der Sende-Ephemeride (502) zu berechnen, wobei der Positionierungspunkt eine Position der Positionierungsvorrichtung (100) repräsentiert;

- einen Korrekturdaten-Erzeugungsbereich (102), der dazu konfiguriert ist, die Verstärkungsinformationen (400) von dem Empfänger (1002) und die Ergebnisse autonomer Positionierung von dem Positionierungsbereich (101) zu erfassen und Korrekturdaten aus den Verstärkungsinformationen (400) und den Ergebnissen autonomer Positionierung zu berechnen, wobei die Korrekturdaten Fehler anzeigen, die erwartungsgemäß in den Beobachtungsdaten (501) enthalten sind, die an dem Positionierungspunkt von jedem GPS-Satelliten (300) empfangen werden;

- einen Beobachtungsdaten-Fehlerkorrekturbereich (104) zum Berechnen von Doppeldifferenzdaten, die durch Subtraktion von Beobachtungsdaten eines Master-Satelliten von Beobachtungsdaten eines Slave-Satelliten erhalten werden;

und

- einen Positionierungs-Berechnungsbereich (105), der dazu konfiguriert ist, eine hochgenaue Positionierung unter Verwendung einer geometrischen Distanz von dem GPS-Satelliten (300) zu dem Positionierungspunkt, der Doppeldifferenzdaten und der Korrekturdaten durchzuführen,

wobei der Korrekturdaten-Erzeugungsbereich (102) Folgendes aufweist:

- einen Speicherbereich (1021) für Positionsinformationen von elektronischen Referenzpunkten, der dazu konfiguriert ist, Positionsinformationen von elektronischen Referenzpunkten zu speichern, welche die Positionen von fünf oder mehr elektronischen Referenzpunkten angeben, die in einer Gitterstruktur angeordnet sind;

- einen Auswahlbereich (1021) für elektronische Referenzpunkte, der dazu konfiguriert ist, aus einer Vielzahl von Kombinationen von vier elektronischen Referenzpunkten, die aus den fünf oder mehr elektronischen Referenzpunkten extrahiert worden sind, eine Kombination auszuwählen, in der ein viereckiger Bereich, der durch die vier elektronischen Referenzpunkte gebildet wird, die approximative Position des durch den Positionierungsbereich (101) bestimmten Positionierungspunktes enthält, und eine Form des viereckigen Bereichs einem Quadrat stark ähnelt, basierend auf der approximativen Position des durch den Positionierungsbereichs (101) bestimmten Positionierungspunktes, und den Orten der elektronischen Referenzpunkte, die in den Positionsinformationen von elektronischen Referenzpunkten angezeigt sind; und

- einen Verzögerungsfehler-Berechnungsbereich (1024, 1027), der dazu konfiguriert ist, eine Berechnung unter Verwendung eines Verzögerungsfehlers durchzuführen, der dem jeweiligen der vier elektronischen Referenzpunkte zugeordnet ist, die durch den Auswahlbereich (1021) für elektronische Referenzpunkte ausgewählt worden sind,

**dadurch gekennzeichnet,**
**dass** der Auswahlbereich (1021) für elektronische Referenzpunkte für Folgendes konfiguriert ist,

- drei elektronische Referenzpunkte auszuwählen, die ein Delaunay-Dreieck bilden, das die approximative Position des Positionierungspunkts enthält,
- andere elektronische Referenzpunkte als die drei elektronischen Referenzpunkte der fünf oder mehr elektronischen Referenzpunkte als Auswahlkandidaten für elektronische Referenzpunkte zu spezifizieren, und
- eine Lagebeziehung zwischen den drei elektronischen Referenzpunkten und eine Lagebeziehung zwischen den Auswahlkandidaten für elektronische Referenzpunkte und den drei elektronischen Referenzpunkten zu analysieren und einen der Auswahlkandidaten für elektronische Referenzpunkte als einen letzten der vier elektronischen Referenzpunkte auszuwählen,

wobei der Auswahlbereich (1021) für elektronische Referenzpunkte dazu konfiguriert ist,

- ferner eine Distanz zwischen jeder Kombination von zwei Punkten der drei elektronischen Referenzpunkte zu berechnen,
- für jeden Auswahlkandidaten für elektronische Referenzpunkte eine Distanz zwischen dem Auswahlkandidaten für elektronische Referenzpunkte und jedem der drei elektronischen Referenzpunkte zu berechnen,
- für jeden Auswahlkandidaten für elektronische Referenzpunkte eine längste Distanz unter der Distanz zwischen jeder Kombination von zwei Punkten der drei elektronischen Referenzpunkte und der Distanz zwischen dem Auswahlkandidaten für elektronische Referenzpunkte und jedem der drei elektronischen Referenzpunkte zu extrahieren,
- eine kürzeste Distanz aus der längsten Distanz zu extrahieren, die für jeden Auswahlkandidaten für Referenzpunkte extrahiert worden ist, und
- einen Auswahlkandidaten für Referenzpunkte als den letzten der vier elektronischen Referenzpunkte auszuwählen, welcher der extrahierten kürzesten Distanz entspricht.

2. Positionierungsvorrichtung (100) nach Anspruch 1,

wobei der Speicherbereich (1021) für Positionsinformationen von elektronischen Referenzpunkten dazu konfiguriert ist, Positionsinformationen von elektronischen Referenzpunkten zu speichern, welche die Positionen von neun oder mehr elektronischen Referenzpunkten anzeigen,
wobei der Auswahlbereich (1021) für elektronische Referenzpunkte dazu konfiguriert ist, neun elektronische Referenzpunkte aus den neun oder mehr elektronischen Referenzpunkten zu extrahieren, basierend auf der approximativen Position des Positionierungspunkts,
aus den neun elektronischen Referenzpunkten drei elektronische Referenzpunkte auszuwählen, die ein Delaunay-Dreieck bilden, in dem die approximative Position des Positionierungspunktes enthalten ist, und
andere elektronische Referenzpunkte als die drei elektronischen Referenzpunkte der neun elektronischen Referenzpunkte als Auswahlkandidaten für elektronische Referenzpunkte zu spezifizieren.

3. Positionierungsvorrichtung (100) nach Anspruch 1,
wobei der Verzögerungsfehler-Berechnungsbereich (1024, 1027) dazu konfiguriert ist, eine Berechnung unter Verwendung eines ionosphärischen Verzögerungsfehlers durchzuführen, der dem jeweiligen der vier elektronischen Referenzpunkte zugeordnet ist, die von dem Auswahlbereich (1021) für elektronische Referenzpunkte ausgewählt worden sind.

4. Positionierungsvorrichtung (100) nach Anspruch 1,
wobei der Verzögerungsfehler-Berechnungsbereich (1024, 1027) dazu konfiguriert ist, eine Berechnung unter Verwendung eines troposphärischen Verzögerungsfehlers durchzuführen, der dem jeweiligen der vier elektronischen Referenzpunkte zugeordnet ist, die von dem Auswahlbereich (1021) für elektronische Referenzpunkte ausgewählt worden sind.

5. Positionierungsvorrichtung (100) nach Anspruch 1,

die ferner einen Speicherbereich (1025) für den zulässigen Bereich aufweist, der dazu konfiguriert ist, einen Maximalwert und einen Minimalwert für den Verzögerungsfehler zu speichern,
wobei, wenn der Verzögerungsfehler, der einem der elektronischen Referenzpunkte zugeordnet ist, größer ist als der Maximalwert, der in dem Speicherbereich (1025) für den zulässigen Bereich gespeichert ist, der Verzögerungsfehler-Berechnungsbereich (1024, 1027) dazu konfiguriert ist, die Berechnung unter Verwendung des Maximalwertes anstatt des Verzögerungsfehlers in Bezug auf den elektronischen Referenzpunkt durchzuführen, und
wenn der Verzögerungsfehler, der einem der elektronischen Referenzpunkte zugeordnet ist, kleiner ist als der Minimalwert, der in dem Speicherbereich für den zulässigen Bereich gespeichert ist, der Verzögerungsfehler-Berechnungsbereich (1024, 1027) dazu konfiguriert ist, die Berechnung unter Verwendung des Minimalwertes anstatt des Verzögerungsfehlers in Bezug auf den elektronischen Referenzpunkt durchzuführen.

6. Positionierungsverfahren, das von einer Positionierungsvorrichtung (100) durchgeführt wird, die mit einem Empfänger (1002) verbunden ist, um ein GPS-Signal von einem GPS-Satelliten (300) und Verstärkungsinformationen (400) als QZS-Signal von einem Quasi-Zenit-Satelliten, QZS, (200) über eine Antenne (1001) zu empfangen, wobei die Verstärkungsinformationen Fehler enthalten, die von dem GPS-Satelliten (300) resultieren, und Fehler, die von einem Übertragungspfad des GPS-Signals resultieren, wobei die Positionierungsvorrichtung ein Computer ist, der an einem beweglichen Körper anzubringen ist und Positionsinformationen von elektronischen Referenzpunkten speichert, die Positionen von fünf oder mehr elektronischen Referenzpunkten anzeigen, die in einer Gitterstruktur angeordnet sind,
wobei das Positionierungsverfahren die folgenden Schritte aufweist:

- einen Positionierungsschritt, bei dem von der Positionierungsvorrichtung (100) Beobachtungsdaten (501) und eine Sende-Ephemeride (502) von dem Empfänger (1002) erfasst werden und bei dem eine approximative Position eines Positionierungspunktes und einer Position jedes GPS-Satelliten (300) als Ergebnisse autonomer Positionierung unter Verwendung der Beobachtungsdaten (501) und der Sendeephemeride (502) berechnet wird, wobei der Positionierungspunkt eine Position der Positionierungsvorrichtung (100) repräsentiert;

- einen Korrekturdaten-Erzeugungsschritt, bei dem von der Positionierungsvorrichtung (100) Verstärkungsinformationen (400) von dem Empfänger (1002) erfasst werden und Korrekturdaten aus den Verstärkungsinformationen (400) und den Ergebnissen autonomer Positionierung berechnet werden, wobei die Korrekturdaten Fehler anzeigen, die erwartungsgemäß in den Beobachtungsdaten (501) enthalten sind, die an dem Positionierungspunkt von jedem GPS-Satelliten (300) empfangen werden;

- einen Korrekturschritt für Beobachtungsdaten-Fehler, bei dem durch die Positionierungsvorrichtung (100) Doppeldifferenzdaten berechnet werden, die durch Subtraktion von Beobachtungsdaten eines Master-Satelliten von Beobachtungsdaten eines Slave-Satelliten erhalten werden; und

- einen Positionierungs-Berechnungsschritt, bei dem durch die Positionierungsvorrichtung (100) eine hochgenaue Positionierung unter Verwendung einer geometrischen Distanz von dem GPS-Satelliten (300) zu dem Positionierungspunkt, der Doppeldifferenzdaten und der Korrekturdaten durchgeführt wird, wobei der Korrekturdaten-Erzeugungsschritt die folgenden Schritte aufweist:

- einen Auswahlschritt für elektronische Referenzpunkte, bei dem durch die Positionierungsvorrichtung (100) eine Kombination aus einer Vielzahl von Kombinationen von vier elektronischen Referenzpunkten ausgewählt wird, die aus den fünf oder mehr elektronischen Referenzpunkten extrahiert worden sind, bei der ein viereckiger Bereich, der durch die vier elektronischen Referenzpunkte gebildet wird, die approximative Position des durch den Positionierungsschritt bestimmten Positionierungspunktes enthält und eine Form des viereckigen Bereichs einem Quadrat stark ähnelt, basierend auf der approximativen Position des durch den Positionierungsschritt bestimmten Positionierungspunktes und den Orten der elektronischen Referenzpunkte, die in den Positionsinformationen von elektronischen Referenzpunkten angegeben sind; und

- einen Verzögerungsfehler-Berechnungsschritt, bei dem durch die Positionierungsvorrichtung (100) eine Berechnung unter Verwendung eines Verzögerungsfehlers durchgeführt wird, der dem jeweiligen der vier elektronischen Referenzpunkte zugeordnet ist, die durch den Auswahlschritt für elektronische Referenzpunkte ausgewählt worden sind,

**dadurch gekennzeichnet,**
**dass** die Positionierungsvorrichtung (100) in dem Auswahlschritt für elektronische Referenzpunkte drei elektronische Referenzpunkte auswählt, die ein Delaunay-Dreieck bilden, in dem die approximative Position des Positionierungspunktes enthalten ist,

- andere elektronische Referenzpunkte als die drei elektronischen Referenzpunkte der fünf oder mehr elektronischen Referenzpunkte als Auswahlkandidaten für elektronische Referenzpunkte spezifiziert, und
- eine Lagebeziehung zwischen den drei elektronischen Referenzpunkten und eine Lagebeziehung zwischen den Auswahlkandidaten für elektronische Referenzpunkte und den drei elektronischen Referenzpunkten analysiert und einen der Auswahlkandidaten für elektronische Referenzpunkte als einen letzten der vier elektronischen Referenzpunkte auswählt,

wobei die Positionierungsvorrichtung (100) in dem Auswahlschritt für elektronische Referenzpunkte ferner eine Distanz zwischen jeder Kombination von zwei Punkten der drei elektronischen Referenzpunkte berechnet,

- für jeden Auswahlkandidaten für elektronische Referenzpunkte eine Distanz zwischen dem Auswahlkandidaten für elektronische Referenzpunkte und jedem der drei elektronischen Referenzpunkte berechnet,
- für jeden Auswahlkandidaten für elektronische Referenzpunkte eine längste Distanz unter der Distanz zwischen jeder Kombination von zwei Punkten der drei elektronischen Referenzpunkte und der Distanz zwischen dem Auswahlkandidaten für elektronische Referenzpunkte und jedem der drei elektronischen Referenzpunkte extrahiert,
- eine kürzeste Distanz aus der längsten Distanz extrahiert, die für jeden Auswahlkandidaten für Referenzpunkte extrahiert worden ist, und
- einen Auswahlkandidaten der Referenzpunkte als den letzten der vier elektronischen Referenzpunkte auswählt, welcher der extrahierten kürzesten Distanz entspricht.

7. Computerprogramm, das Instruktionen enthält, um eine Positionierungsvorrichtung (100) zu veranlassen, das Verfahren nach Anspruch 6 auszuführen, wenn die Positionierungsvorrichtung (100) mit einem Empfänger (1002) verbunden ist, der ein GPS-Signal von einem GPS-Satelliten (300) und Verstärkungsinformationen (400) als ein QZS-Signal von einem Quasi-Zenit-Satelliten, QZS, (200) über eine Antenne (1001) empfängt, wobei die Verstärkungsinformation Fehler enthalten, die von dem GPS-Satelliten (300) resultieren, und Fehler, die von einem Übertragungspfad des GPS-Signals resultieren, wobei die Positionierungsvorrichtung ein Computer ist, der an einem mobilen Körper anzubringen ist und Positionsinformationen von elektronischen Referenzpunkten speichert, die Orte von fünf oder mehr elektronischen Referenzpunkten anzeigen, die in einer Gitterstruktur angeordnet sind.

**Revendications**

1. Dispositif de positionnement (100) qu'il s'agit de monter sur un corps mobile, dans lequel le dispositif de positionnement (100) est connecté à un récepteur (1002) destiné à recevoir un signal GPS provenant d'un satellite GPS (300) et une information de renforcement (400) sous forme de signal QZS provenant d'un satellite quasi zénithal, QZS, (200) via une antenne (1001), dans lequel l'information de renforcement comprend des erreurs résultant du satellite GPS (300) et des erreurs résultant d'un chemin de propagation du signal GPS, le dispositif de positionnement (100) comprenant :

- une section de positionnement (101) configurée pour acquérir des données d'observation (501) et un éphéméride de diffusion (502) depuis le récepteur (1002), et pour calculer une position approximative d'un point de positionnement et une position de chaque satellite GPS (300) à titre de résultats de positionnement autonome en utilisant les données d'observation (501) et l'éphéméride de diffusion (502), dans lequel le point de positionnement représente une position du dispositif de positionnement (100) ;
- une section de création de données de correction (102) configurée pour acquérir l'information de renforcement (400) depuis le récepteur (1002) et les résultats de positionnement autonome provenant de la section de positionnement (101) et pour calculer des données de correction à partir de l'information de renforcement (400) et des résultats de positionnement autonome, les données de correction indiquant des erreurs escomptées pour être incluses dans les données d'observation (501) qui sont reçues au niveau du point de positionnement depuis chaque satellite GPS (300) ;
- une section de correction d'erreurs de données d'observation (104) pour calculer des données de double différence qui sont obtenues en soustrayant des données d'observation d'un satellite maître de données d'observation d'un satellite esclave ; et
- une section de calcul de positionnement (105) configurée pour exécuter un positionnement de haute précision en utilisant une distance géométrique depuis le satellite GPS (300) jusqu'au point de positionnement, les données de double différence et les données de correction,

dans lequel la section de création de données de correction (102) comprend :

- une section de stockage d'information de position de points de référence électroniques (1021) configurée pour stocker une information de position de points de référence électroniques indiquant des emplacements de cinq points de référence électroniques ou plus qui sont agencés dans un motif de grille ;
- une section de sélection de points de référence électroniques (1021) configurée pour sélectionner, parmi une pluralité de combinaisons de quatre points de référence électroniques extraits à partir des cinq points de référence électroniques ou plus, une combinaison dans laquelle une aire quadrangulaire formée par les quatre points de référence électroniques inclut à l'intérieur d'elle-même la position approximative du point de positionnement déterminée par la section de positionnement (101) et une forme de l'aire quadrangulaire ressemble étroitement à un carré, sur la base de la position approximative du point de positionnement déterminée par la section de positionnement (101) et des emplacements des points de référence électroniques indiqués dans l'information de position de points de référence électroniques ; et
- une section de calcul d'erreur de retard (1024, 1027) configurée pour exécuter un calcul en utilisant une erreur de retard associée à chacun des quatre points de référence électroniques sélectionnés par la section de sélection de points de référence électroniques (1021),

**caractérisé en ce que** :

la section de sélection de points de référence électroniques (1021) est configurée

- pour sélectionner trois points de référence électroniques qui forment un triangle de Delaunay incluant à l'intérieur de lui-même la position approximative du point de positionnement,
- pour spécifier des points de référence électroniques autres que les trois points de référence électroniques des cinq points de référence électroniques ou plus, à titre de points de référence électroniques candidats de sélection, et

- pour analyser une relation de position parmi les trois points de référence électroniques et une relation de position entre les points de référence électroniques candidats de sélection et les trois points de référence électroniques, et pour sélectionner un des points de référence électroniques candidats de sélection à titre d'au moins un des quatre points de référence électroniques,

dans lequel la section de sélection de points de référence électroniques (1021) est configurée :

- pour en outre calculer une distance entre chaque combinaison de deux points des trois points de référence électroniques,
- pour calculer, pour chaque point de référence électronique candidat de sélection, une distance entre ledit point de référence électronique candidat de sélection et chacun des trois points de référence électroniques,
- pour extraire, pour chaque point de référence candidat de sélection, une distance la plus longue parmi la distance entre chaque combinaison de deux points des trois points de référence électroniques et la distance entre ledit point de référence électronique candidat de sélection et chacun des trois points de référence électroniques,
- pour extraire une distance la plus courte parmi la distance la plus longue extraite pour chaque point de référence candidat de sélection, et
- pour sélectionner un point de référence candidat de sélection correspondant à la distance la plus courte extraite, à titre dudit au moins un des quatre points de référence électroniques.

2. Dispositif de positionnement (100) selon la revendication 1,

dans lequel la section de stockage d'information de position de points de référence électroniques (1021) est configurée pour stocker une information de position de points de référence électroniques indiquant des emplacements de neuf points de référence électroniques ou plus, dans lequel la section de sélection de points de référence électroniques (1021) est configurée

pour extraire neuf points de référence électroniques parmi les neuf points de référence électroniques ou plus, sur la base de la position approximative du point de positionnement,

pour sélectionner trois points de référence électroniques qui forment un triangle de Delaunay incluant à l'intérieur de lui-même la position approximative du point de positionnement à partir des neuf points de référence électroniques, et

pour spécifier des points de référence électroniques autres que les trois points de référence électroniques des neufs points de référence électroniques, à titre de points de référence électroniques candidats de sélection.

3. Dispositif de positionnement (100) selon la revendication 1,
dans lequel la section de calcul d'erreur de retard (1024, 1027) est configurée pour exécuter un calcul en utilisant une erreur de retard ionosphérique associée à chacun des quatre points de référence électroniques sélectionnés par la section de sélection de points de référence électronique (1021).

4. Dispositif de positionnement (100) selon la revendication 1,
dans lequel la section de calcul d'erreur de retard (1024, 1027) est configurée pour exécuter un calcul en utilisant une erreur de retard troposphérique associée à chacun des quatre points de référence électroniques sélectionnés par la section de sélection de points de référence électronique (1021).

5. Dispositif de positionnement (100) selon la revendication 1, comprenant en outre une section de stockage de plage admissible (1025) configurée pour stocker une valeur maximum et une valeur minimum pour l'erreur de retard,

dans lequel, quand l'erreur de retard associée à l'un des points de référence électroniques est plus grande que la valeur maximum stockée dans la section de stockage de plage admissible (1025), la section de calcul d'erreur de retard (1024, 1027) est configurée pour exécuter le calcul en utilisant la valeur maximum au lieu de l'erreur de retard vis-à-vis dudit point de référence électronique, et

quand l'erreur de retard associée à l'un des points de référence électroniques est plus petite que la valeur minimum stockée dans la section de stockage de plage admissible, la section de calcul d'erreur de retard (1024, 1027) est configurée pour exécuter le calcul en utilisant la valeur minimum au lieu de l'erreur de retard vis-à-vis dudit point de référence électronique.

**6.** Procédé de positionnement exécuté par un dispositif de positionnement (100) connecté à un récepteur (1002) destiné à recevoir un signal GPS provenant d'un satellite GPS (300) et une information de renforcement (400) sous forme de signal QZS provenant d'un satellite quasi zénithal, QZS, (200) via une antenne (1001), dans lequel l'information de renforcement comprend des erreurs résultant du satellite GPS (300) et des erreurs résultant d'un chemin de propagation du signal GPS,

le dispositif de positionnement est un ordinateur qu'il s'agit de monter sur un corps mobile et stockant une information de position de points de référence électroniques indiquant des emplacements de cinq points de référence électroniques ou plus qui sont agencés dans un motif de grille, le procédé de positionnement comprenant :

une étape de positionnement, via le dispositif de positionnement (100), consistant à acquérir des données d'observation (501) et un éphéméride de diffusion (502) depuis le récepteur (1002), et à calculer une position approximative d'un point de positionnement et une position de chaque satellite GPS (300) à titre de résultats de positionnement autonome en utilisant les données d'observation (501) et l'éphéméride de diffusion (502), dans lequel le point de positionnement représente une position du dispositif de positionnement (100) ;

- une étape de création de données de correction, via le dispositif de positionnement (100), consistant à acquérir l'information de renforcement (400) depuis le récepteur (1002), et à calculer des données de correction à partir de l'information de renforcement (400) et des résultats de positionnement autonome, les données de correction indiquant des erreurs escomptées pour être incluses dans les données d'observation (501) qui sont reçues au niveau du point de positionnement depuis chaque satellite GPS (300) ;
- une étape de correction d'erreurs de données d'observation, via le dispositif de positionnement (100), consistant à calculer des données de double différence qui sont obtenues en soustrayant des données d'observation d'un satellite maître de données d'observation d'un satellite esclave ; et
- une étape de calcul de positionnement, via le dispositif de positionnement (100), consistant à exécuter un positionnement de haute précision en utilisant une distance géométrique depuis le satellite GPS (300) jusqu'au point de positionnement, les données de double différence et les données de correction,

dans lequel l'étape de création de données de correction comprend :

- une étape de sélection de points de référence électroniques, via le dispositif de positionnement (100), consistant à sélectionner, à partir d'une pluralité de combinaisons de quatre points de référence électroniques extraits à partir des cinq points de référence électroniques ou plus, une combinaison dans laquelle une aire quadrangulaire formée par les quatre points de référence électroniques inclut à l'intérieur d'elle-même la position approximative du point de positionnement déterminé par l'étape de positionnement, et une forme de l'aire quadrangulaire ressemble étroitement à un carré, sur la base de la position approximative du point de positionnement déterminée par l'étape de positionnement et des emplacements des points de référence électroniques indiqués dans l'information de position de points de référence électroniques ; et
- une étape de calcul d'erreur de retard, via le dispositif de positionnement (100), consistant à exécuter un calcul en utilisant une erreur de retard associée à chacun des quatre points de référence électroniques sélectionnés par l'étape de sélection de points de référence électroniques,

**caractérisé en ce que** :

dans l'étape de sélection de points de référence électroniques, le dispositif de positionnement (100)

- sélectionne trois points de référence électroniques qui forment un triangle de Delaunay incluant à l'intérieur de lui-même la position approximative du point de positionnement,
- spécifie des points de référence électroniques autres que les trois points de référence électroniques des cinq points de référence électroniques ou plus, à titre de points de référence électroniques candidats de sélection, et
- analyse une relation de position parmi les trois points de référence électroniques et une relation de position entre les points de référence électroniques candidats de sélection et les trois points de référence électroniques, et sélectionne un des points de référence électroniques candidats de sélection à titre d'au moins un des quatre points de référence électroniques,

dans lequel, dans l'étape de sélection de points de référence électroniques, le dispositif de positionnement (100) calcule en outre une distance entre chaque combinaison de deux points des trois points de référence électroniques,

- calcule, pour chaque point de référence électronique candidat de sélection, une distance entre ledit point de référence électronique candidat de sélection et chacun des trois points de référence électroniques,

- extrait, pour chaque point de référence candidat de sélection, une distance la plus longue parmi la distance entre chaque combinaison de deux points des trois points de référence électroniques et la distance entre ledit point de référence électronique candidat de sélection et chacun des trois points de référence électroniques,

- extrait une distance la plus courte parmi la distance la plus longue extraite pour chaque point de référence candidat de sélection, et

- sélectionne un point de référence candidat de sélection correspondant à la distance la plus courte extraite, à titre dudit au moins un des quatre points de référence électroniques.

7. Programme d'ordinateur comprenant des instructions destinées à amener un dispositif de positionnement (100) à mettre en œuvre le procédé selon la revendication 6 quand le dispositif de positionnement (100) est connecté à un récepteur (1002) qui reçoit un signal GPS provenant d'un satellite GPS (300) et une information de renforcement (400) sous forme de signal QZS provenant d'un satellite quasi zénithal, QZS, (200), via une antenne (1001), dans lequel l'information de renforcement comprend des erreurs résultant du satellite GPS (300) et des erreurs résultant d'un chemin de propagation du signal GPS,

le dispositif de positionnement étant un ordinateur qu'il s'agit de monter sur un corps mobile et stockant une information de position de points de référence électroniques indiquant des emplacements de cinq points de référence électroniques ou plus qui sont agencés dans un motif de grille.

# Fig. 1

200: QUASI-ZENITH SATELLITE

300a: GPS SATELLITE

300n

· · ·

400: REINFORCEMENT INFORMATION

501: OBSERVATION DATA

501

502

502: BROADCAST EPHEMERIS

100: POSITIONING DEVICE

EP 3 163 324 B1

# Fig. 2

```
┌─────────────────────────────┐          ┌─────────────────────────────┐
│         INPUT OF            │          │        OUTPUT OF           │
│    POSITIONING DEVICE       │          │    POSITIONING DEVICE      │
│  ┌───────────────────────┐  │          │                            │
│  │     QZS SIGNAL        │  │          │                            │
│  │                       │  │          │                            │
│  │   REINFORCEMENT       │  │          │                            │
│  │   INFORMATION         │  │          │                            │
│  └───────────────────────┘  │          │                            │
│  ┌───────────────────────┐  │   100    │                            │
│  │     GPS SIGNAL        │  │          │                            │
│  │                       │──┼──►┌──────────────┐──►                  │
│  │    OBSERVATION        │  │   │ POSITIONING  │    POSITION         │
│  │      DATA             │  │   │   DEVICE     │                    │
│  │                       │  │   └──────────────┘                    │
│  │    BROADCAST          │  │          │                            │
│  │    EPHEMERIS          │  │          │                            │
│  └───────────────────────┘  │          │                            │
└─────────────────────────────┘          └─────────────────────────────┘
```

# Fig. 3

| No | INPUT/OUTPUT DATA | DATA UPDATE PERIOD DATA OUTPUT PERIOD | DESCRIPTION |
|---|---|---|---|
| 1 | OBSERVATION DATA | 0. 1 TO 1. 0 sec | DISTANCE BETWEEN SATELLITE AND POSITIONING POINT (ANTENNA POSITION) |
| 2 | BROADCAST EPHEMERIS (EPHEMERIS) | ABOUT 2H | DATA USED TO CALCULATE SATELLITE POSITION |
| 3 | REINFORCEMENT INFORMATION | 2 TYPES: 5, 30 sec | DATA USED TO CALCULATE ERROR INCLUDED IN OBSERVATION DATA RECEIVED AT POSITIONING POINT |
| 4 | POSITION | EQUAL TO OBSERVATION DATA | ABSOLUTE POSITION (ACCURATE ON THE ORDER OF CENTIMETERS) OF POSITIONING POINT CALCULATED BY POSITIONING DEVICE ON THE BASIS OF No. 1 TO 3 |

# Fig. 4

| | L1 WAVE FREQUENCY = 1575.42 MHz WAVELENGTH λ(1) = ABOUT 19 cm | L2 WAVE FREQUENCY = 1227.60 MHz WAVELENGTH λ(2) = ABOUT 24 cm | DESCRIPTION |
|---|---|---|---|
| PSEUDORANGE [m] | PSEUDORANGE FOR L1 WAVE OF SATELLITE i (HEREINAFTER DENOTED AS (i, 1)) | PSEUDORANGE FOR L2 WAVE OF SATELLITE i (HEREINAFTER DENOTED AS P(i, 2)) | REPRESENTS DISTANCE BETWEEN SATELLITE AND POSITIONING POINT, WHERE "PSEUDO" INDICATES THAT VARIOUS TYPES OF BIAS ERRORS ARE INCLUDED. NOISE OTHER THAN BIAS ERRORS HAS MAGNITUDE ON THE ORDER OF METERS. |
| CARRIER PHASE [cycle] | CARRIER PHASE FOR L1 WAVE OF SATELLITE i (HEREINAFTER DENOTED AS Φ(i, 1)) | CARRIER PHASE FOR L2 WAVE OF SATELLITE i (HEREINAFTER DENOTED AS Φ(i, 2)) | MULTIPLIED BY WAVELENGTH TO REPRESENT DISTANCE BETWEEN SATELLITE AND POSITIONING POINT. HAS ROUGHLY THE SAME TYPE OF BIAS ERROR AS PSEUDORANGE, BUT ALSO INCLUDES UNKNOWN BIAS ERROR (HEREINAFTER CALLED AMBIGUITY*) RESULTING FROM RECEIVER CORRESPONDING TO INTEGER WAVELENGTH. NOISE OTHER THAN BIAS ERROR HAS MAGNITUDE ON THE ORDER OF MILLIMETERS.<br><br>* MAGNITUDE OF AMBIGUITY VARIES FOR EACH SATELLITE SIGNAL BUT DOES NOT VARY WHILE THE SAME SATELLITE SIGNAL CONTINUES TO BE RECEIVED. |

EP 3 163 324 B1

# Fig. 5

TRUE POSITION

BROADCAST POSITION

ORBIT INFORMATION ERROR
SATELLITE CLOCK ERROR
INTER-FREQUENCY BIAS
} ERRORS RESULTING FROM GPS SATELLITE

IONOSPHERIC PROPAGATION DELAY ERROR
TROPOSPHERIC PROPAGATION DELAY ERROR
DIRECT WAVE
} ERRORS RESULTING FROM SIGNAL PROPAGATION PATH

ERROR CAUSED BY MULTIPATH

REFLECTED WAVE

RECEIVER

RECEIVER CLOCK ERROR
RECEIVER NOISE
} ERRORS RESULTING FROM RECEIVER

EP 3 163 324 B1

## Fig. 6

ERRORS OF GPS SIGNAL

REINFORCEMENT INFORMATION

| | HIGH RATE (UPDATED EVERY FIVE SECONDS) (FREQUENCY-INDEPENDENT ERROR) | LOW RATE (UPDATED EVERY 30 SECONDS) (FREQUENCY-DEPENDENT ERROR) |
|---|---|---|
| NO SPATIAL FLUCTUATION | · SATELLITE CLOCK ERROR<br>· SATELLITE ORBIT ERROR*<br>· INTER-FREQUENCY BIAS*<br>(L0 BIAS, ISB) | ·INTER-FREQUENCY BIAS<br>(L1 AND L2 BIAS, ISB) |
| HAS SPATIAL FLUCTUATION | ·TROPOSPHERIC DELAY ERROR*<br><br>* UPDATED EVERY FIVE SECONDS BY CONSISTENCY | ·IONOSPHERIC DELAY ERROR |

$$\text{L0 BIAS} = \frac{F_1^2}{F_1^2 - F_2^2}(\text{L1 BIAS}) - \frac{F_2^2}{F_1^2 - F_2^2}(\text{L2 BIAS})$$

F1 AND F2 REPRESENT FREQUENCIES OF L1 AND L2 WAVES

NOT INCLUDED IN REINFORCEMENT INFORMATION

· PHASE WIND UP EFFECT
· EARTH TIDE EFFECT

| NOT INCLUDED IN CORRECTION DATA | · RECEIVER CLOCK ERROR<br>· RECEIVER NOISE (PSEUDORANGE ON THE ORDER OF METERS, PHASE ON THE ORDER OF MILLIMETERS), MULTIPATH<br>· AMBIGUITY (ONLY FOR PHASE) |
|---|---|

EP 3 163 324 B1

Fig. 7

●: GRID POINT (60 km INTERVALS)

Fig. 8

GPS SIGNAL (OBSERVATION DATA 501,
                      BROADCAST EPHEMERIS 502)

QZS SIGNAL
   (REINFORCEMENT INFORMATION400)

RECEIVER                                                    1002

| 1003 GPS SIGNAL PROCESSING SECTION | QZS SIGNAL PROCESSING SECTION 1004 |

100 : POSITIONING DEVICE

| 101 APPROXIMATE POSITION/ SATELLITE POSITION CALCULATION SECTION | CORRECTION DATA CREATION SECTION 102 |
| 104 OBSERVATION DATA ERROR CORRECTION SECTION | POSITIONING CALCULATION SECTION 105 |

EP 3 163 324 B1

## Fig. 9

Fig. 9

INPUT 400

REINFORCEMENT INFORMATION

102

HUP PERIOD

LUP PERIOD

1022
SATELLITE CLOCK ERROR COMPUTATION SECTION

SATELLITE CLOCK ERROR $T_u$ [Hz]

1023
SATELLITE ORBIT ERROR COMPUTATION SECTION

SATELLITE ORBIT ERROR $T_u$ [Hz]

DISTRIBUTION GRID SELECTION SECTION

1021

1024
IONOSPHERIC INFORMATION COMPUTATION SECTION

IONOSPHERIC INFORMATION

1027
IONOSPHERIC INFORMATION ADDITION PROCESSING SECTION

$T_u$ [Hz]

1025
TROPOSPHERIC INFORMATION COMPUTATION SECTION

TROPOSPHERIC INFORMATION

$T_u$ [Hz]

1026
SATELLITE SIGNAL BIAS PROCESSING SECTION

$T_u$ [Hz]

1028
CARRIER PHASE CORRECTION AMOUNT AND PSEUDORANGE CORRECTION AMOUNT

$T_u$ [Hz]
POSITIONING

LATITUDE, LONGITUDE, ALTITUDE EPHEMERIS (ELEVATION ANGLE/ SATELLITE POSITION/VELOCITY)

$T_u$ [Hz]

$T_u$ [Hz]

1010
AUTONOMOUS POSITIONING RESULTS

EP 3 163 324 B1

37

# Fig. 10

# Fig.11

EP 3 163 324 B1

# Fig. 12

SELECTED THREE POINTS

REMAINING SIX POINTS

S103, S204

SELECTION OF
LAST ONE POINT

for i = 1 TO 6

POINT i

| CALCULATE DISTANCE BETWEEN TWO POINTS | CALCULATE DISTANCE BETWEEN TWO POINTS |

| DISTANCE BETWEEN TWO POINTS FOR ALL COMBINATIONS OF TWO POINTS AMONG THREE POINTS (THREE COMBINATIONS) | DISTANCE BETWEEN TWO POINTS FOR POINT i AND EACH OF SELECTED THREE POINTS (THREE COMBINATIONS) |

MAX(i) = MAXIMUM VALUE OF DISTANCE BETWEEN TWO POINTS
(AMONG TOTAL OF SIX COMBINATIONS)

POINT i WITH SMALLEST MAX(i) AMONG
SIX POINTS

## Fig.13

READ LOCATION INFORMATION OF ALL POINTS — S201

SELECT N POINTS P CLOSE TO ROVER FROM AMONG ALL GRID POINTS, BASED ON APPROXIMATE POSITION OF ROVER — S202  ← COMPUTE APPROXIMATE POSITION OF ROVER

SELECT THREE POINTS FORMING DELAUNAY TRIANGLE SURROUNDING ROVER, BASED ON SELECTED POINTS P AND APPROXIMATE POSITION OF ROVER, AND TREATS REMAINING N-3 POINTS AS SELECTION CANDIDATES — S203

SELECT LAST ONE OF FOUR POINTS FROM AMONG N-3 SELECTION CANDIDATES — S204

OUTPUT SELECTED FOUR POINTS — S205

EP 3 163 324 B1

Fig.14

S301 — CALCULATE DISTANCE BETWEEN TWO POINTS AMONG SELECTED THREE POINTS

S302 — CALCULATE DISTANCE BETWEEN TWO POINTS FOR ONE OF SELECTED THREE POINTS AND ONE OF REMAINING N-3 POINTS (POINT i)

S303 — CALCULATE DISTANCE BETWEEN TWO POINTS FOR ALL COMBINATION OF TWO POINTS AMONG THREE POINTS

S304 — CALCULATE DISTANCE BETWEEN TWO POINTS FOR POINT i AND EACH OF SELECTED THREE POINTS

S305 — CALCULATE MAXIMUM VALUE MAX (i) OF DISTANCE BETWEEN TWO POINTS. SELECT POINT i WITH SMALLEST MAX (i).

# Fig. 15

# Fig. 16

# Fig. 17

100

2d

12 POINTS

# Fig. 18

# Fig. 19

# Fig. 20

# Fig. 21

```
                    ┌──────────────────────┐
                    │  ARITHMETIC DEVICE   │──── 901
                    └──────────┬───────────┘
                               │
         ┌──────────────┬──────┴──────┬──────────────┐
    ┌────┴─────┐   ┌────┴─────┐   ┌───┴──────┐   ┌───┴──────┐
    │ EXTERNAL │   │   MAIN   │   │COMMUNIC- │   │  INPUT/  │
    │ STORAGE  │   │ STORAGE  │   │  ATION   │   │  OUTPUT  │
    │  DEVICE  │   │  DEVICE  │   │  DEVICE  │   │  DEVICE  │
    └──────────┘   └──────────┘   └──────────┘   └──────────┘
         │              │              │              │
        902            903            904            905
```

# Fig. 22

# Fig. 23

EP 3 163 324 B1

Fig. 24

52

## REFERENCES CITED IN THE DESCRIPTION

**Patent documents cited in the description**

- JP 2002323552 A
- JP 2004198291 A
- WO 2011100680 A2
- US 2006158373 A1
- US 2012182181 A1

**Non-patent literature cited in the description**

- **MASAYUKI SAITO et al.** Centimeter-class Augmentation System Utilizing Quasi-Zenith Satellite. *PROCEEDINGS OF THE 24TH INTERNATIONAL TECHNICAL MEETING OF THE SATELLITE DIVISION OF THE INSTITUTE OF NAVIGATION (ION GNSS 2011), THE INSTITUTE OF NAVIGATION, 8551 RIXLEW LANE SUITE 360 MANASSAS, VA 20109, USA,* 23 September 2011, 1243